(19) **Europäisches Patentamt / European Patent Office / Office européen des brevets**

(11) **EP 4 675 859 A1**

(12) **EUROPÄISCHE PATENTANMELDUNG**

(43) Veröffentlichungstag:
   **07.01.2026  Patentblatt 2026/02**

(51) Internationale Patentklassifikation (IPC):
   **H01R 13/22** (2006.01)   **H01R 13/627** (2006.01)

(21) Anmeldenummer: **25186403.9**

(52) Gemeinsame Patentklassifikation (CPC):
   **H01R 13/22; H01R 13/6276;** B62J 6/00;
   B62J 43/23; B62J 43/30; B62K 2206/00;
   H01R 2201/26

(22) Anmeldetag: **30.06.2025**

(84) Benannte Vertragsstaaten:
   **AL AT BE BG CH CY CZ DE DK EE ES FI FR GB GR HR HU IE IS IT LI LT LU LV MC ME MK MT NL NO PL PT RO RS SE SI SK SM TR**
   Benannte Erstreckungsstaaten:
   **BA**
   Benannte Validierungsstaaten:
   **GE KH LA MA MD TN**

(30) Priorität: **02.07.2024  DE 102024118817**

(71) Anmelder: **Fidlock GmbH**
   **30659 Hannover (DE)**

(72) Erfinder:
   • **HILLER, Lasse**
     **30952 Ronnenberg (DE)**
   • **MÜHLE, Sören**
     **12209 Berlin (DE)**

(74) Vertreter: **Maikowski & Ninnemann**
   **Patentanwälte Partnerschaft mbB**
   **Postfach 15 09 20**
   **10671 Berlin (DE)**

(54) **VERBINDERBAUGRUPPE UND VERBINDERBAUTEIL**

(57)   Die vorgeschlagene Lösung betrifft eine Verbinderbaugruppe mit einem ersten Verbinderbauteil (1) mit einem Eingriffselement (11) und einer ersten Magneteinrichtung (M1) und einem zweiten Verbinderbauteil (2) mit einem Verbinderkörper (20), der zumindest einen starren und an dem Verbinderkörper (20) unbeweglich ausgebildeten Eingriffsvorsprung (210, 211) und eine zweite Magneteinrichtung (M2) aufweist.

   Die ersten und zweiten Verbinderbauteile (1, 2) umfassen jeweils einen ersten oder Kontaktabschnitt (12, 22) mit wenigstens einem ersten oder zweiten elektrischen Kontakt (31, 32; 41, 42) wobei die ersten und zweiten Kontaktabschnitte (12, 22) der ersten und zweiten Verbinderbauteile (1, 2) in einer Kontaktierungsposition vorliegen können, in der die ersten und zweiten Kontakte (31, 32; 41, 42) entlang der Ansetzrichtung (X) miteinander in elektrisch leitendem Kontakt stehen. An dem Verbinderkörper (20) ist zumindest ein Rampenelement (213) vorgesehen, über das die ersten und zweiten Kontaktabschnitte (12, 22) zueinander beabstandet gehalten werden, während dem zweiten Verbinderbauteil (2) über das zumindest eine Rampenelement (213) eine Verlagerung relativ zu dem Eingriffselement (11) mit einer Bewegungskomponente in einer quer zu der Ansetzrichtung (X) verlaufenden Eingriffsrichtung (Y) in die Sicherungsposition vorgegeben wird.

Fig. 1A

EP 4 675 859 A1

**Beschreibung**

Die vorgeschlagene Lösung betrifft insbesondere eine Verbinderbaugruppe mit einem ersten Verbinderbauteil und einem zweiten Verbinderbauteil.

Unterschiedliche Typen von Verbinderbaugruppen mit ersten und zweiten Verbinderbauteilen sind aus dem Stand der Technik weithin bekannt. Aus der WO 2020/157289 A1 ist beispielsweise eine Verbinderbaugruppe mit ersten und zweiten Verbinderbauteilen bekannt, bei denen in einem verbundenen Zustand zumindest ein verstellbares Verriegelungselement selbsttätig eine Verriegelungsstellung einnimmt, in der das zumindest eine Verriegelungselement mit zumindest einem Eingriffselement des ersten Verbinderbauteils in Eingriff steht, sodass das erste Verbinderbauteil und das zweite Verbinderbauteil in dem verbundenen Zustand entlang einer Ansetzrichtung aneinander gehalten sind, entlang der das erste Verbinderbauteil und das zweite Verbinderbauteil aneinander ansetzbar und miteinander verbindbar sind. Das zumindest eine Verriegelungselement wird hier magnetisch unterstützt in seine Verriegelungsstellung verstellt, wenn die ersten und zweiten Verbinderbauteile bestimmungsgemäß aneinandergesetzt sind.

Insbesondere für eine lösbare Verbindung eines elektrischen Zubehörteils mit einer stromführenden Komponente kann eine vergleichbare Verbindung über erste und zweite Verbinderbauteile von Vorteil sein. Hierbei besteht jedoch einerseits die zusätzliche Herausforderung, elektrische Kontakte der beiden Verbinderbauteile auf eine Art und Weise miteinander in Kontakt zu bringen, die für einen Nutzer der Verbinderbaugruppe komfortabel ist und gleichzeitig zuverlässig die Kontaktierung zu gewährleisten, ohne dass die Kontakte auch bei einem wiederholten Trennen und erneuten Verbinden der beiden Verbinderbauteile nicht beschädigt werden oder verschleißen. Darüber hinaus soll selbstverständlich ein sicherer Halt des Zubehörteils gewährleistet sein.

Vor diesem Hintergrund sieht die vorgeschlagene Lösung insbesondere eine Verbinderbaugruppe des Anspruchs 1 vor.

Eine vorgeschlagene Verbinderbaugruppe umfasst ein erstes Verbinderbauteil mit einem Eingriffselement und einer ersten Magneteinrichtung sowie ein zweites Verbinderbauteil mit einem Verbinderkörper, der zumindest einen starren und an dem Verbinderkörper unbeweglich ausgebildeten Eingriffsvorsprung und eine zweite Magneteinrichtung aufweist. Die erste Magneteinrichtung und die zweite Magneteinrichtung wirken einander magnetisch anziehend zusammen, um die ersten und zweiten Verbinderbauteile entlang einer Ansetzrichtung einander bis zum Erreichen einer Sicherungsposition anzunähern, in der die ersten und zweiten Verbinderbauteile miteinander verbunden sind und in der der zumindest eine Eingriffsvorsprung mit dem Eingriffselement in Eingriff steht, sodass die ersten und zweiten Verbinderbauteile entlang der Ansetzrichtung aneinandergehalten sind. Das erste Verbinderbauteil umfasst einen ersten Kontaktabschnitt mit wenigstens einem ersten elektrischen Kontakt. Das zweite Verbinderbauteil umfasst ferner einen zweiten Kontaktabschnitt mit wenigstens einem zweiten elektrischen Kontakt, wobei die ersten und zweiten Kontaktabschnitte in der Sicherungsposition der ersten und zweiten Verbinderbauteile in einer Kontaktierungsposition vorliegen, in der die ersten und zweiten Kontakte entlang der Ansetzrichtung miteinander in elektrisch leitendem Kontakt stehen. An dem Verbinderkörper ist zumindest ein Rampenelement vorgesehen, über das die ersten und zweiten Kontaktabschnitte zueinander beabstandet gehalten werden, während dem zweiten Verbinderbauteil über das zumindest eine Rampenelement eine Verlagerung relativ zu dem Eingriffselement mit einer Bewegungskomponente in einer quer zu der Ansetzrichtung verlaufenden Eingriffsrichtung in die Sicherungsposition vorgegeben wird, sodass der zumindest eine Eingriffsvorsprung entlang der Eintrittsrichtung in Eingriff mit dem Eingriffselement gelangt und die ersten und zweiten Kontaktabschnitte entlang der Eingriffsrichtung in die Kontaktierungsposition gelangen.

Mit der vorgeschlagenen Lösung ist nicht nur eine magnetkraftunterstützte Verbindung zweier Verbinderbauteile miteinander und eine mechanischen Sicherung dieser Verbinderbauteile aneinander komfortabel möglich. Vielmehr ist über das zumindest eine Rampenelement ein bestimmter Ablauf für die Verlagerung der beiden Verbinderbauteile relativ zueinander bis zum Erreichen der Schließposition entlang verschiedener Richtungen vorgebbar und damit erreichbar, dass die ersten und zweiten elektrischen Kontakte bis zum Erreichen der Kontaktierungsposition durch die ersten und zweiten Kontaktabschnitte nicht reibend und damit verschleißend einander entlanggeführt werden. Bei einer vorgeschlagenen Verbinderbaugruppe wird somit in einer ersten Verbindungsphase das zweite Verbinderbauteil dem ersten Verbinderbauteil zunächst ausschließlich entlang einer Ansetzrichtung angenähert, bevor in einer nachfolgenden zweiten Verbindungsphase das zweite Verbindungsbauteil (auch) quer zur Ansetzrichtung und damit seitlich verlagert wird, um die Sicherungsposition einzunehmen, in der über den zumindest einen starren Eingriffsvorsprung und das Eingriffselement eine mechanische Sicherung der beiden Verbinderbauteile aneinander gegeben ist. Derart können die ersten und zweiten Verbinderbauteile miteinander formschlüssig verbunden und aneinander gesichert werden und die elektrischen Kontakte der beiden Verbinderbauteile zuverlässig zur Signal- und/oder Stromführung in Kontakt gebracht werden, ohne dass an den jeweiligen Verbinderbauteilen verstellbar gelagerte Verriegelungselemente vorgesehen werden müssten.

Die seitliche Verlagerung entlang der Eingriffsrichtung wird dabei weiterhin durch die einander magnetisch anziehenden ersten und zweiten Magneteinrichtungen unterstützt. So bleiben die ersten und zweiten Verbinderbauteile auch bei einer Verlagerung mit einer Bewegungskomponente in Eingriffsrichtung durch die ersten und zweiten Magneteinrichtungen entlang einer zu der Ansetzrichtung parallelen Achse aufeinander zu belastet. Durch das Auftreffen des Rampenelements auf einen Abschnitt des ersten Verbinderbauteils, beispielsweise eine Stirnfläche des Eingriffselements, wird lediglich dem zweiten Verbinderbauteil die Verlagerungsbewegung relativ zu dem Eingriffselement mit der Bewegungskomponente in Eingriffsrichtung unter Beabstandung der ersten und zweiten Kontakte aufgezwungen. Über eine geneigt verlaufende Rampenfläche des Rampenelements kann hierbei der Abstand zwischen den ersten und zweiten Kontakten in der zweiten Verbindungsphase bis zum Erreichen der Kontaktierungsposition kontinuierlich abnehmen.

Eine vorgeschlagene Verbinderbaugruppe kann beispielsweise für die Festlegung eines Zubehörteils, beispielsweise eines elektrischen Verbrauchers, wie einer Leuchte oder einer Kamera, an einem Fahrrad dienen. Eines der Verbinderbauteile ist dann an einen Rahmen des Fahrrads montiert oder hieran integriert, während das andere Verbinderbauteil an dem Zubehörteil fixiert ist.

In einer Ausführungsvariante ist das Rampenelement in einer Verbinderaufnahme des zweiten Verbinderbauteils vorgesehen, in die das Eingriffselement entlang der Ansetzrichtung einführbar ist. Insbesondere kann vorgesehen sein, dass das zweite Verbinderbauteil entlang der Ansetzrichtung an das erste Verbinderbauteil aufsteckbar ist und das Eingriffselement des ersten Verbinderbauteils in der Sicherungsposition in die Verbinderaufnahme ragt und hierin größtenteils oder sogar vollständig aufgenommen ist.

Das Rampenelement kann grundsätzlich eine geneigt zu der Ansetzrichtung verlaufende ebene oder gekrümmte Rampenfläche ausbilden. Über diese geneigt zur Ansetzrichtung verlaufende Rampenfläche wird dann die Relativbewegung quer zu der Ansetzrichtung in Eingriffsrichtung vorgegeben. Hierbei hat es sich beispielsweise als vorteilhaft erwiesen, wenn die Rampenfläche des Rampenelements in einem Winkel zu der Ansetzrichtung verläuft, der in einem Bereich von 82,5° bis 67,5°, insbesondere in einem Bereich von 80° bis 70° liegt. Für eine gekrümmte Rampenfläche wird hierunter verstanden, dass eine Tangentialebene an die gekrümmte Rampenfläche unter einem Winkel zu der Ansetzrichtung in dem angegebenen Bereich verläuft.

In einer Ausführungsvariante ist an dem Verbinderkörper des zweiten Verbinderbauteils zumindest eine weitere Rampenfläche vorgesehen, die geneigt zu der Ansetzrichtung verläuft und über die dem zweiten Verbinderbauteil - bei der Verbindung der ersten und zweiten Verbinderbauteile miteinander - in einer ersten Verbindungsphase eine Verlagerung relativ zu dem Eingriffselement entlang einer quer zu der Ansetzrichtung verlaufenden Querrichtung vorgibt, die entgegengesetzt zu der Eingriffsrichtung verläuft. In der ersten Verbindungsphase wird folglich über die zumindest eine weitere Rampenfläche das erste Verbinderbauteil zunächst entgegengesetzt zu der späteren Eingriffsrichtung verdrängt. So kann über die zumindest eine weitere Rampenfläche der zumindest eine Eingriffsvorsprung so weit in die Querrichtung relativ zu dem Eingriffselement verlagert werden, dass der zumindest eine starre Eingriffsvorsprung des zweiten Verbinderbauteils seitlich an dem Eingriffselement vorbeigeführt wird. Die erste Verbindungsphase lässt sich somit in einen ersten Teil und einen zweiten Teil gliedern, wobei in dem ersten Teil ausschließlich eine Annäherung der beiden Verbinderbauteile entlang der Ansetzrichtung erfolgt, während in dem zweiten Teil eine weitere Annäherung in Ansetzrichtung von einer Verlagerungsbewegung des zweiten Verbinderbauteils in der Querrichtung überlagert ist. Über das Rampenelement wird wiederum in einer auf die erste Verbindungsphase folgenden zweiten Verbindungsphase dem zweiten Verbinderbauteil die Verlagerung relativ zu dem Eingriffselement mit der Bewegungskomponente entlang der Eingriffsrichtung in die Sicherungsposition vorgegeben. Hierbei kann diese Verlagerung gegebenenfalls auch durch eine seitliche Magnetanziehung der ersten und zweiten Magneteinrichtungen unterstützt sein. Diese seitliche bzw. seitwärts und mithin quer zur Ansetzrichtung gerichtete Magnetanziehung kann sich hierbei beispielsweise dadurch ergeben, dass die ersten und zweiten Magneteinrichtungen quer zu Ansetzrichtung zueinander versetzt werden, bevor das Rampenelement und das Eingriffselement aufeinandertreffen.

Für eine zusätzliche Funktionsintegration kann die zumindest eine weitere Rampenfläche an dem zumindest einen Eingriffsvorsprung vorgesehen, insbesondere hieran ausgebildet sein. Beim Ansetzen der ersten und zweiten Verbinderbauteile aneinander kann somit der Eingriffsvorsprung mit einer geneigt verlaufenden Rampenfläche auf eine Stirnfläche des Eingriffselement treffen und über diese Rampenfläche an der Stirnfläche des Eingriffselements entlang in der Querrichtung verdrängt werden, sodass der zumindest eine Eingriffsvorsprung bezüglich des Eingriffselement seitlich nach außen verlagert wird.

Die zumindest eine weitere Rampenfläche verläuft beispielsweise in einem Winkel zur Ansetzrichtung, der in einem Bereich von 35° bis 60°, insbesondere in einem Bereich von 40° bis 55° liegt. Hierüber kann über eine vergleichsweise kleine weitere Rampenfläche eine ausreichend große Verdrängung und damit Umlenkung beim Ansetzen und Verbinden der beiden ersten und zweiten Verbinderbauteile erreicht werden. Der Winkel, unter dem die zumindest eine weitere Rampenfläche zu der Ansetzrichtung verläuft, kann insbesondere so gewählt sein, dass eine magnetische Anziehung der ersten und zweiten Magneteinrichtungen in Ansetzrichtung (ohne nutzerseitig quer zur Ansetzrichtung aufzubringender Verstellkraft) quer zu Ansetzrichtung überwunden werden kann.

Die Verbinderaufnahme des zweiten Verbinderbauteils kann eine Basis umfassen, an der das Rampenelement vorgesehen ist und zu der der zumindest eine Eingriffsvorsprung in Ansetzrichtung beabstandet ist. Wenn an dem Eingriffsvorsprung die weitere Rampenfläche vorgesehen ist, kann durch einen solchen Versatz zwischen dem Rampenelement und dem Eingriffsvorsprung erreicht werden, dass die Verlagerungsbewegungen des zweiten Verbinderbauteils relativ zu dem Eingriffselement des ersten Verbinderbauteils beim Verbinden der ersten und zweiten Verbinderbauteile miteinander bis zum Erreichen der Sicherungsposition zeitlich aufeinanderfolgend aufgetreten und sich damit nicht wechselseitig störend beeinflussen.

Der zumindest eine Eingriffsvorsprung kann auch in Eingriffsrichtung zu dem Rampenelement versetzt vorgesehen sein. Damit gelangen folglich unterschiedliche Bereiche des Eingriffselements in Kontakt mit einer weiteren Rampenfläche des zumindest einen Eingriffsvorsprungs einerseits und mit dem Rampenelement andererseits.

In einer Ausführungsvariante sind an dem Verbinderkörper des zweiten Verbinderbauteils zwei starre Eingriffsvorsprünge vorgesehen, die jeweils in der Sicherungsposition mit dem Eingriffselement des ersten Verbinderbauteils in Eingriff stehen. Hierbei stehen die beiden Eingriffsvorsprünge beispielsweise auf zwei voneinander abgewandten (Längs-) Seiten des Eingriffselements in Eingriff mit dem Eingriffselement, um das Halten der beiden Verbinderbauteile aneinander auch bei höheren Belastungen zu sichern. Das Rampenelement kann beispielsweise mittig zwischen beiden Eingriffsvorsprüngen vorgesehen sein, hierbei jedoch - wie vorstehend erläutert - in Ansetzrichtung und in Eingriffsrichtung versetzt zu den ersten und zweiten Eingriffsvorsprüngen.

In einer Ausführungsvariante wird dem zweiten Verbinderbauteil über das zumindest eine Rampenelement bei der Verbindung mit dem ersten Verbinderbauteil eine Kippbewegung relativ zu dem Eingriffselement um eine Kippachse vorgegeben, die sowohl zu der Ansetzrichtung als auch zu der Eingriffsrichtung senkrecht verläuft. Die Verlagerungsbewegung mit einer Bewegungskomponente in der Eingriffsrichtung ist somit nicht zwingend linear. Vielmehr kann das zweite Verbinderbauteil auch unter Ausführung einer Kippbewegung (unter anhaltend anziehender Wirkung der ersten und zweiten Magneteinrichtung) in die Sicherungsposition gelangen. Ebenso können damit auch die ersten und zweiten Kontaktabschnitte unter Ausführung einer solchen Kippbewegung in die Kontaktierungsposition gelangen. Über das zumindest eine Rampenelement ist in einer solchen Ausführungsvariante die Verbinderbaugruppe konfiguriert, dem zweiten Verbinderbauteil bei der Verbindung mit dem ersten Verbinderbauteil eine entsprechende Kippbewegung relativ zu dem Eingriffselement um die zur Ansetzrichtung und zur Eingriffsrichtung jeweils senkrecht verlaufende Kippachse vorzugeben.

Für das Trennen der ersten und zweiten Verbinderbauteile kann wiederum vorgesehen sein, dass, in der Sicherungsposition der ersten und zweiten Verbinderbauteile, der zumindest eine Eingriffsvorsprung durch Verschieben des zweiten Verbinderbauteils relativ zu dem ersten Verbinderbauteil entgegengesetzt zu der Eingriffsrichtung außer Eingriff mit dem Eingriffselement bringbar ist. Ein solches Verschieben erfolgt hierbei unter Überwindung einer von den einander anziehenden Magneteinrichtungen aufgebrachten Magnetkraft. So sind die ersten und zweiten Verbinderbauteile durch die ersten und zweiten Magneteinrichtungen stets in Richtung der Sicherungsposition belastet. Eine nutzerseitig (z.B. manuell) aufgebrachte Kraft, um den zumindest ein Eingriffsvorsprung wieder außer Eingriff mit dem Eingriffselement zu bringen, muss folglich diese magnetisch aufgebrachte Belastung überwinden.

Ergänzend kann vorgesehen sein, dass bei dem Verschieben des zweiten Verbinderbauteils entgegengesetzt zu der Eingriffsrichtung das zweite Verbinderbauteil über das zumindest eine Rampenelement entgegengesetzt zu der Ansetzrichtung relativ zu dem ersten Verbinderbauteil verlagert wird. Über das Rampenelement kann somit das Verbinderbauteil bei dem Verschieben zum Trennen der beiden Verbinderbauteile voneinander angehoben bzw. von dem ersten Verbinderbauteil zumindest geringfügig abgehoben werden. Hierüber kann eine Entnahme- oder Trennrichtung vorgegeben werden, entlang der die ersten und zweiten Verbinderbauteile vollständig voneinander trennbar sind. Zudem lässt sich hierüber eine magnetische Anziehungskraft zwischen den ersten und zweiten Magneteinrichtungen bereits etwas abschwächen, die für das vollständige Trennen der ersten und zweiten Verbinderbauteile voneinander anschließend überwunden werden muss.

Alternativ oder ergänzend kann vorgesehen sein, dass in der Sicherungsposition der ersten und zweiten Verbinderbauteile der zumindest eine Eingriffsvorsprung durch Kippen des zweiten Verbinderbauteils relativ zu dem ersten Verbinderbauteil um eine Kippachse außer Eingriff mit dem Eingriffselement bringbar ist, wobei diese Kippachse sowohl zu der Ansetzrichtung als auch zu der Eingriffsrichtung senkrecht verläuft. Unter Bezugnahme auf die vorstehend erläuterte Ausführungsvariante kann hierbei auch vorgesehen sein, dass für einen Nutzer beim Trennen der ersten und zweiten Verbinderbauteile voneinander sowohl die Möglichkeit gegeben ist, den zumindest einen Eingriffsvorsprung durch Verschieben entgegengesetzt zur Eingriffsrichtung außer Eingriff mit dem Eingriffselement zu bringen, als auch den zumindest einen Eingriffsvorsprung durch Kippen des zweiten Verbinderbauteils um die Kippachse außer Eingriff mit dem Eingriffselement zu bringen.

In einer Ausführungsvariante, in der ein Außereingriffbringen allein oder zumindest teilweise mit Verkippen des Verbinderbauteils um eine Kippachse relativ zu dem ersten Verbinderbauteil ermöglicht ist, kann - für die Kippbarkeit des zweiten Verbinderbauteils relativ zu dem ersten Verbinderbauteil in der Sicherungsposition - an der Verbinderaufnahme eine Aussparung vorgesehen sein. Über diese Aussparung wird folglich die Kippbarkeit des zweiten Verbinderbauteils ermöglicht, wenn die ersten und zweiten Verbinderbauteile in der Sicherungsposition vorliegen. Die Aussparung, die an der für das Eingriffselement vorgesehenen Verbinderaufnahme vorgesehen ist, liegt einer den zumindest einen Eingriffsvorsprung aufweisenden Wandung der Verbinderaufnahme gegenüber und gestattet ein Ausschwenken des Eingriffselements aus der Verbinderaufnahme heraus. Durch die Aussparung ist folglich das Eingriffselement nicht gegen ein Ausschwenken aus der Verbinderaufnahme heraus blockiert.

In einer Ausführungsvariante ist vorgesehen, dass das Eingriffselement an dem Verbinderkörper des ersten Verbinderbauteils längs vorsteht und mit einer Längsseite zu dem ersten Kontaktabschnitt benachbart ist, an der eine Eingriffsaussparung vorgesehen ist, in die in der Sicherungsposition der zumindest eine Eingriffsvorsprung des zweiten Verbinderbauteils eingreift. An der Längsseite, benachbart zu dem Kontaktabschnitt, ist folglich zur Realisierung eines die ersten und zweiten Verbinderbauteile aneinander sichernden Formschlusses die Eingriffsaussparung vorgesehen. Diese Eingriffsaussparung weist dann eine (maximale) Tiefe t auf, die in einer Schnittansicht parallel zur Ansetzrichtung mit Blick entlang der Eingriffsrichtung messbar ist. Hierbei hat es sich als vorteilhaft gezeigt, dass diese Tiefe t in einem bestimmten Verhältnis zu einem Abstand d steht, in dem sich der zumindest eine erste Kontakt des ersten Kontaktabschnitts zu der Längsseite des Eingriffselement befindet. Der Abstand d wird hierbei entlang einer Raumachse gemessen, die sowohl zu der Ansetzrichtung als auch zu der Eingriffsrichtung senkrecht verläuft. Über den Abstand d wird dann gemessen, wie weit der erste Kontakt des ersten Kontaktabschnitts seitlich zu der benachbarten Längsseite des in die Verbinderaufnahme einzusteckenden Eingriffselement entfernt ist. Für eine möglichst kompakte Ausführung sowohl des ersten Verbinderbauteils als auch der Verbinderbaugruppe, ohne hierbei auf eine komfortable Handhabung für einen Nutzer und einen sicheren Halt der beiden Verbinderbauteile aneinander verzichten zu müssen, hat es sich als vorteilhaft erwiesen, wenn der Abstand d maximal dem 6-fachen, insbesondere maximal dem 4-fachen entspricht. Gegebenenfalls kann ergänzend vorgesehen sein, dass der Abstand mindestens dem 1,5-fachen der Tiefe t entspricht.

Beispielsweise ist die Eingriffsaussparung als Nut an dem Eingriffselement ausgebildet, die sich quer zur Ansetzrichtung und quer zur Eingriffsrichtung an einer Längsseite des Eingriffselement entlang erstreckt.

Alternativ oder ergänzend kann eine Ausführungsvariante vorsehen, dass der zumindest eine erste Kontakt des ersten Kontaktabschnitts (insbesondere sein für die Kontaktierung mit dem zweiten Kontakt zugängliches Ende) zu der die Eingriffsaussparung aufweisenden und zu dem ersten Kontaktabschnitt benachbarten Längsseite des Eingriffselements um maximal ein Abstand d beabstandet ist, der in einem bestimmten Verhältnis zu einer Höhe $h_1$ steht, in der sich die Eingriffsaussparung an der Längsseite des Eingriffselements bezüglich einer Kontaktfläche des ersten Kontaktabschnitt befindet. An der Kontaktfläche des ersten Kontaktabschnitts ist der erste Kontakt zugänglich. Die Kontaktfläche definiert somit eine (Kontakt-) Ebene an dem ersten Kontaktabschnitt, in der erste und zweite Kontakte in der Kontaktierungsposition der ersten und zweiten Kontaktabschnitte aneinander anliegen. Die Höhe $h_1$ für den Abstand der Eingriffsaussparung zu dieser Kontaktfläche wird folglich entlang der Ansetzrichtung gemessen. Hierbei hat es sich dann wiederum als vorteilhaft erwiesen, wenn der Abstand d mindestens so groß ist wie die Hälfte der Höhe $h_1$ und maximal so groß wie das Dreifache der Höhe $h_1$. In einer entsprechenden Ausführungsvariante gilt folglich: $0{,}5h_1 \leq d \leq 3h_1$. Dies schließt insbesondere ein, dass $h_1 \leq d \leq 2h_1$ oder $h_1 \leq d \leq 1{,}8h$, oder $1{,}2h_1 \leq d \leq 1{,}6h_1$ gelten kann.

In einer Ausführungsvariante stehen alternativ oder ergänzend die Höhe $h_1$ und die Tiefe t der Eingriffsaussparung zueinander in einem bestimmten Verhältnis. So kann beispielsweise gelten: $1{,}5t \leq h_1 \leq 3{,}5t$. Die Höhe $h_1$ liegt hier folglich in einem Bereich von 1,5t bis 3,5t. Insbesondere kann die Höhe $h_1$ im Bereich von 2t bis 3t liegen.

Die vorstehend beschriebenen Abhängigkeiten zwischen dem Abstand d, der Tiefe t und der Höhe $h_1$ können jeweils allein, insbesondere aber auch in Kombination miteinander zu einer vorteilhafte Dimensionierung des ersten Verbinderbauteils mit Kontaktabschnitt und Eingriffselement führen, mit der unterschiedliche zweite Verbinderbauteile bei kompakt bauender Verbinderbaugruppe in besonders nutzerfreundlicher Weise verbunden werden können und die sowohl ein einfaches Überführen der beiden Verbinderbauteile in die Sicherungsposition als auch ein komfortables Trennen der beiden Verbinderbauteile voneinander gestattet.

In einer Ausführungsvariante ist alternativ oder ergänzend vorgesehen, dass er zumindest eine erste Kontakt des ersten Kontaktabschnitts an einer Kontaktfläche des ersten Kontaktabschnitts (für die Kontaktierung des zumindest einen zweiten Kontakts des zweiten Verbinderbauteils) zugänglich ist und das Eingriffselement an dem Verbinderkörper des ersten Verbinderbauteils parallel zu der Ansetzrichtung längs vorsteht und mit einer Längsseite zu dem ersten Kontaktabschnitt benachbart ist. An der Längsseite ist eine Eingriffsaussparung vorgesehen, in die in der Sicherungsposition der zumindest eine Eingriffsvorsprung des zweiten Verbinderbauteils (zur Realisierung eines die ersten und zweiten Verbinderbauteile aneinander sichernden Formschlusses) eingreift und die eine der Kontaktfläche zugewandte Eingriffsschräge umfasst. Diese Eingriffsschräge liegt in einer Ausführungsvariante in einer Ebene, die unter einem vorgegebenen Neigungswinkel geneigt zu der Kontaktfläche verläuft. So kann die Kontaktfläche eine (Kontakt-) Ebene definieren, an der sich die ersten und zweiten Kontakte kontaktieren können, und die Ebene, entlang der sich die Eingriffsschräge der Eingriffsaussparung erstreckt, verläuft in einem vorgegebenen Neigungswinkel zu dieser Kontaktebene. Eine derart geneigt zu der Kontaktfläche vorgesehene Eingriffsschräge bzw. schräg verlaufende Eingriffsfläche an der Eingriffsaussparung unterstützt eine störungsfreie Kontaktierung der ersten und zweiten Kontakte der ersten und zweiten Verbinderbauteile, ohne dass hierüber der sichere Halt der ersten und zweiten Verbinderbauteile aneinander in der Sicherungsposition nachteilig beeinträchtigt wird. Eine Eingriffsschräge kann zudem bei einer Belastung der miteinander verbundene Verbinderbauteile in einem schrägen, d.h., geneigt zur Ansetzrichtung verlaufen Lasteintrag in die Verbinderbauteile resultieren, was sich wiederum vorteilhaft auf die Belastbarkeit und/oder die Gestaltungsfreiheit des zumindest einen Eingriffsvorsprungs auswirken kann.

Beispielsweise hat sich in diesem Zusammenhang ein Neigungswinkel in einem Bereich von 30° bis 75°, insbesondere im Bereich von 40° bis 60° als vorteilhaft erwiesen, gegebenenfalls auch in Kombination mit einer oder mehreren der vorstehend erläuterten Abhängigkeiten zwischen den Dimensionierungsgrößen D, t und $h_1$. Alternativ kann eine Eingriffsfläche vorgesehen sein, die parallel zu der Kontaktfläche verläuft. Auch ein solcher Verlauf kann in bestimmten Situationen vorteilhaft sein, insbesondere in Kombination mit einer oder mehreren der vorstehend erläuterten Abhängigkeiten zwischen den Dimensionierungsgrößen D, t und $h_1$

Grundsätzlich kann, wie vorstehend bereits erläutert, vorgesehen sein, dass die Verbinderbaugruppe für die Festlegung eines Zubehörteils, insbesondere eines elektrischen Verbrauchers an einem Fahrrad vorgesehen ist. Bei einem solchen Zubehörteil kann es sich beispielsweise um eine Leuchte oder eine Kamera handeln. Über die Verbindung der ersten und zweiten Verbinderbauteile miteinander lässt sich das entsprechende Zubehörteil lösbar an dem Fahrrad (oder einem anderen Zweirad, wie zum Beispiel einem Motorrad) festlegen.

In einer Ausführungsvariante ist beispielsweise das erste Verbinderbauteil mit dem Eingriffselement fahrradfest montiert oder rahmenseitig integriert. Das zweite Verbinderbauteil mit dem wenigstens einen Rampenelement ist beispielsweise mit dem an dem Fahrrad festzulegenden Zubehörteil fixiert. Umgekehrt kann selbstverständlich auch das zweite Verbinderbauteil fahrradfest sein, während das erste Verbinderbauteil mit dem an dem Fahrrad festzulegenden Zubehörteil fixiert ist. Grundsätzlich ist zu beachten, dass wenn vorliegend von der Möglichkeit einer Verlagerung des zweiten Verbinderbauteils relativ zu dem ersten Verbinderbauteil oder relativ zu einer Komponente des ersten Verbinderbauteils die Rede ist, selbstverständlich umgekehrt auch erfasst ist, dass in einem solchen Fall auch umgekehrt das zweite Verbinderbauteil fest fixiert und das erste Verbinderbauteil an das zweite Verbinderbauteil lösbar angebracht werden kann. Eine tatsächliche Verlagerung kann sich somit auch durch das erste Verbinderbauteil relativ zu dem zweiten Verbinderbauteil ergeben.

Ein weiterer Aspekt der vorgeschlagenen Lösung betrifft ein Verbinderbauteil für eine Verbinderbaugruppe, insbesondere für eine Ausführungsvariante einer vorgeschlagenen Verbinderbaugruppe.

Ein solches Verbinderbauteil weist ein Eingriffselement auf und ist zum Verbinden mit einem anderen Verbinderbauteil der Verbinderbaugruppe entlang einer Ansetzrichtung vorgesehen, das einen starren Eingriffsvorsprung für einen Eingriff an dem Eingriffselement aufweist. Das Verbinderbauteil umfasst ferner einen Kontaktabschnitt mit wenigstens einem elektrischen Kontakt, der vorgesehen ist, mit einem zweiten Kontakt des anderen Verbinderbauteils entlang der Ansetzrichtung in elektrisch leitenden Kontakt gebracht zu werden. Das zweite Verbinderbauteil kann gegebenenfalls auch eine zweite Magneteinrichtung umfassen, die mit einer dann ergänzend vorgesehenen ersten Magneteinrichtung des Verbinderbauteils magnetisch anziehend zusammenwirkt, um die Verbinderbauteile der Verbinderbaugruppe entlang der Ansetzrichtung einander bis zum Erreichen einer Sicherungsposition anzunähern. In der Sicherungsposition sind die Verbinderbauteile miteinander verbunden und der zumindest eine Eingriffsvorsprung steht mit dem Eingriffselement in Eingriff, sodass die Verbinderbauteile entlang der Ansetzrichtung aneinandergehalten sind.

Für ein vorgeschlagenes Verbinderbauteil ist eine Gestaltung des Eingriffselements in Relation zu dem Kontaktabschnitt vorgesehen, die sich mit Blick auf die Verwendbarkeit dieses Verbinderbauteils mit einem anderen Verbinderbauteil und die Handhabung für einen Nutzer als grundsätzlich vorteilhaft erwiesen hat. So steht das Eingriffselement an dem Verbinderkörper eines vorgeschlagenen Verbinderbauteils parallel zur Ansetzrichtung längs vor und ist mit einer Längsseite zu dem Kontaktabschnitt benachbart, an der eine Eingriffsaussparung vorgesehen ist. In die Eingriffsaussparung kann der zumindest eine Eingriffsvorsprung des anderen Verbinderbauteils eingreifen.

In einer ersten Variante ist der zumindest eine erste Kontakt des Kontaktabschnitts an einer Kontaktfläche des Kontaktabschnitts zugänglich und die Eingriffsaussparung weist eine der Kontaktfläche zugewandte Eingriffsfläche auf, wobei die Eingriffsfläche in einer Ebene liegt, die unter einem Neigungswinkel in einem Bereich von 30° bis 75° geneigt der Kontaktfläche verläuft . Die Eingriffsfläche verläuft somit schräg - als Eingriffsschräge - bezüglich der Kontaktfläche. Alternativ kann eine Eingriffsfläche an der Eingriffsaussparung parallel zu Kontaktfläche verlaufen.

In einer hiermit kombinierbaren jedoch auch alternativ umsetzbaren Variante ist der zumindest eine erste Kontakt des Kontaktabschnitts zu der die Eingriffsaussparung aufweisenden und zu dem Kontaktabschnitt benachbarten Längsseite des Eingriffselements um maximal einen Abstand d beabstandet, der in einem bestimmten Verhältnis zu einer Höhe $h_1$ steht, in der sich die Eingriffsaussparung zu der Kontaktfläche befindet. Der Abstand d wird hierbei entlang einer Raumachse gemessen, die sowohl zu der Ansetzrichtung als auch einer zu der Ansetzrichtung quer verlaufenden Querrichtung, entlang der sich die Eingriffsaussparung erstreckt, senkrecht verläuft. Die Höhe $h_1$ wird wiederum entlang der Ansetzrichtung gemessen und ist daher dafür ein Maß, wie weit die Eingriffsaussparung zu der Kontaktfläche und folglich zu einer damit definierten Kontaktebene an dem Kontaktabschnitt des Verbinderbauteils beabstandet ist. Hierbei hat es sich als vorteilhaft herausgestellt, dass der Abstand d mindestens so groß ist wie die Hälfte der Höhe $h_1$ und maximal dem Dreifachen der Höhe $h_1$ entspricht. Es soll somit $0{,}5h_1 \leq d \leq 3h_1$ gelten.. Dies schließt beispielsweise Ausführungsvarianten ein, bei denen $h_1 \leq d \leq 2h_1$ oder $h_1 \leq d \leq 1{,}8h$, oder $1{,}2h_1 \leq d \leq 1{,}6h_1$ gilt.

Eine Dimensionierung eines (ersten) Verbinderbauteils für eine Verbinderbaugruppe gemäß einer oder beider vorstehend erläuterter Varianten ist dabei letztlich auch unabhängig von der Gestaltung eines weiteren (zweiten) Verbinderbauteils der Verbinderbaugruppe im Hinblick auf die benutzerfreundliche Handhabung und flexible Verbindung zweier Verbinderbauteile von erheblichem Vorteil, wie sich anhand von unterschiedlichen Prototypen und Experimenten gezeigt hat.

Teil der vorgeschlagenen Lösung ist ferner ein Fahrrad mit mindestens einer Ausführungsvariante einer vorgeschlagenen Verbinderbaugruppe und/oder mit mindestens eine Ausführungsvariante eines vorgeschlagenen Verbinderbauteils.

Die beigefügten Figuren veranschaulichen exemplarisch mögliche Ausführungsvarianten der vorgeschlagenen Lösung.

Hierbei zeigen:

| | |
|---|---|
| Figuren 1A-1B | zwei Explosionsdarstellung mit verschiedenen Blickwinkeln einer Ausführungsvariante einer vorgeschlagenen Verbinderbaugruppe; |
| Figuren 2A-2B | zwei perspektivische Ansichten der Verbinderbaugruppe der Figuren 1A und 1B vor einer Verbindung eines ersten Verbinderbauteils und eines zweiten Verbinderbauteils miteinander; |
| Figur 3 | die beiden Verbinderbauteile der Figuren 2A und 2B in Seitenansicht; |
| Figuren 4A-4B | in mit den Figuren 2A und 2B übereinstimmenden Ansichten die beiden Verbinderbauteile nach einer weiteren, magnetisch unterstützten Annäherung aneinander entlang einer Ansetzrichtung; |
| Figur 5 | eine Seitenansicht der beiden Verbinderbauteile der Figuren 4A und 4B; |
| Figur 6 | eine Vorderansicht der Verbinderbauteile der Figuren 4A-4B und 5; |
| Figur 7 | eine Draufsicht der Verbinderbaugruppe mit Blick auf das zweite Verbinderbauteil; |
| Figuren 7A-7C | Schnittdarstellungen entlang der Schnittlinie A-A (Figur 7A), entlang der Schnittlinie B-B (Figur 7B) und der Schnittlinie C-C (Figur 7C) der Figur 7; |
| Figuren 8A-11C | in mit den Figuren 4A bis 7C übereinstimmenden Ansichten die beiden Verbinderbauteile bei weiterer Annäherung aneinander in einer ersten Verbindungsphase, in der das zweite Verbinderbauteil in einer quer zu der Ansetzrichtung verlaufenden Querrichtung bezüglich des ersten Verbinderbauteils verdrängt wird; |
| Figuren 12A-15C | in mit den Figuren 4A bis 7C und 8A bis 11C übereinstimmenden Ansichten die beiden Verbinderbauteile in einer späteren zweiten Verbindungsphase, in der das zweite Verbinderbauteil aufgrund eines Rampenelements des zweiten Verbinderbauteils mit einer Bewegungskomponente in eine quer zur Ansetzrichtung verlaufenden Eingriffsrichtung in eine Eingriffsposition verkippt wird; |
| Figuren 16A-19C | in mit den Figuren 4A bis 7C, 8A bis 11C und 12A bis 15C übereinstimmenden Ansichten die beiden Verbinderbauteile in einer Sicherungsposition, in der Kontaktabschnitte der beiden Verbinderbauteile mit jeweils einem Paar von elektrischen Kontakten in einer Kontaktierungsposition vorliegen; |
| Figuren 20A-23C | in mit den Figuren 4A bis 7C, 8A bis 11C, 12A bis 15C und 16A bis 19C |

übereinstimmenden Ansichten, die beiden Verbinderbauteile bei einem Lösen der beiden Verbinderbauteile voneinander durch Verkippen des zweiten Verbinderbauteils bezüglich des ersten Verbinderbauteils;

Figur 24        das Verbinderbauteil der Verbinderbaugruppe der Figuren 1A bis 23C in perspektivische Einzelansicht;

Figur 25        das Verbinderbauteil der Figur 24 in Draufsicht;

Figur 25A       das Verbinderbauteil der Figuren 24 und 25 in einer Schnittdarstellung entlang der Schnittlinie A-A der Figur 25.

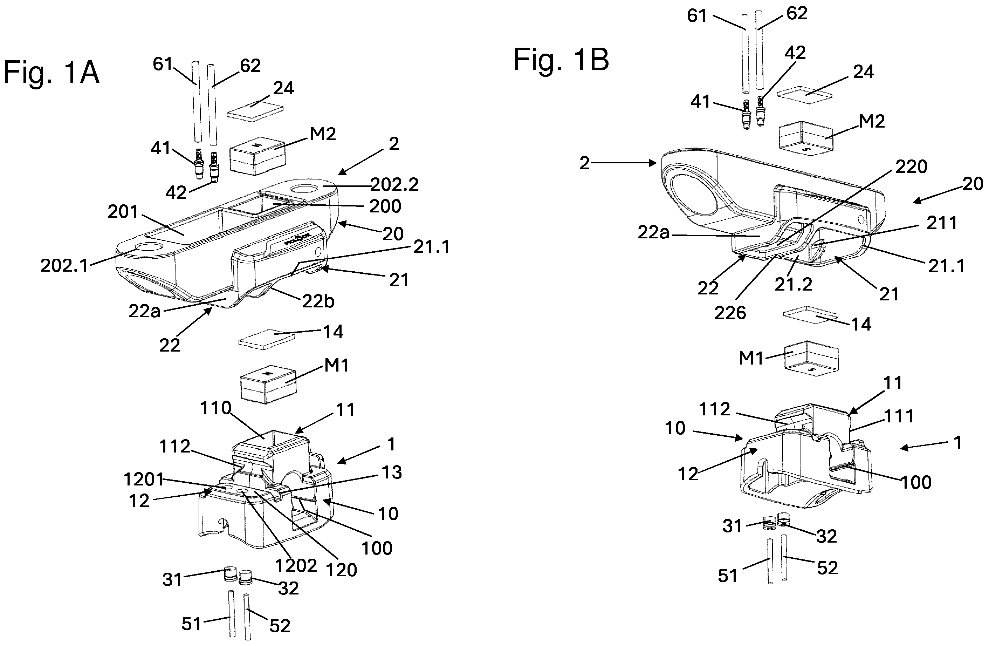

Die Figuren 1A und 1B zeigen in Explosionsdarstellungen jeweils mit unterschiedlichen Blickrichtungen eine Ausführungsvariante einer vorgeschlagenen Verbinderbaugruppe mit einem ersten Verbinderbauteil 1 und einem zweiten Verbinderbauteil 2. Das erste Verbinderbauteil 1 weist einen - im vorliegenden Fall quaderförmigen - Basiskörper 10 auf. An diesem Basiskörper 10 steht ein Eingriffselement 11 zapfenförmig vor. Das an dem Basiskörper 10 vorstehende Eingriffselement 11 bildet an zwei voneinander abgewandten Längsseiten Eingriffsaussparungen 111 und 112 in Form von längserstreckten Nuten aus.

In diese Eingriffsaussparungen 111 und 112 können in einer Sicherungsposition der ersten und zweiten Verbinderbauteile 1 und 2 Eingriffsvorsprünge 211 und 212 beiderseits des Eingriffselements 11 formschlüssig eingreifen, um die beiden Verbinderbauteile 1 und 2 aneinanderzuhalten.

Der Basiskörper 10 des ersten Verbinderbauteils 1 bildet benachbart zu dem Eingriffselement 11 einen Kontaktabschnitt 12 aus. Das Eingriffselement steht hierbei gegenüber dem Kontaktabschnitt 12 an dem Basiskörper 10 hervor, sodass der Kontaktabschnitt 12 gegenüber dem Eingriffselement 11 vertieft vorliegt.

An dem Kontaktabschnitt 12 sind zwei Kontaktöffnungen 1201 und 1202 ausgebildet, in die erste elektrische Kontakte 31 und 32 in Form von Kontaktpins ragen. Enden der ersten Kontakte 31 und 32 sind über die Kontaktöffnungen 1201, 1202 an dem Kontaktabschnitt 12 von außen zugänglich, sodass diese mit zweiten elektrischen Kontakten 41 und 42 des zweiten Verbinderbauteils 2 elektrisch leitend in Kontakt gebracht werden können.

Beispielsweise kann das Verbinderbauteil 1 der dargestellten Ausführungsvariante für die Montage an ein Fahrrad vorgesehen sein. Hierfür wird dann beispielsweise ein Befestigungsriemen durch eine durchgehende Verbindungsöffnung 100 an dem Basiskörper 10 geführt und an einem Rahmenrohr, Sattelrohr oder einer Lenkstange des Fahrradrahmens fixiert, um den Basiskörper 10 und damit das Verbinderbauteil 1 an dem Fahrradrahmen festzulegen. Über Anschlussleitungen 51 und 52 des ersten Verbinderbauteils 1 sind dann die ersten elektrischen Kontakte 31 und 32 des ersten Verbinderbauteils 1 mit einer fahrradseitigen Stromversorgung oder einer Batterie der Verbinderbaugruppe verbunden.

Das zweite Verbinderbauteil 2 trägt beispielsweise an einem Verbinderkörper 20 ein Zubehörteil für das Fahrrad. Beispielsweise kann in einer Aufnahme 201 des Verbinderkörpers 20 zumindest ein Teil eines elektrischen Verbrauchers, wie beispielsweise ein Teil einer Fahrradleuchte aufgenommen werden. Über Verbindungsstellen 202.1 und 202.2 an einer Oberseite des Verbinderkörpers 2 kann eine solche Leuchte an dem Verbinderkörper 20 fixiert und gegebenenfalls an dem Verbinderkörper 20 auswechselbar festgelegt sein.

An einer Unterseite des Verbinderkörpers 20 ist ein zweiter Kontaktabschnitt 22 ausgebildet, an dem Enden zweier zweiter elektrischer Kontakte 41, 42, zum Beispiel in Form federnd gelagerter Kontaktpins, zugänglich sind. Diese zweiten elektrischen Kontakte 41, 42 können über zwei Anschlussleitungen 61 und 62 des zweiten Verbinderbauteils 2 mit der Fahrradleuchte verbunden sein.

Die Enden der zweiten elektrischen Kontakte 41 und 42 liegen an einer zweiten Kontaktfläche 220 des zweiten Kontaktabschnitts 22 zugänglich vor, die gegenüber zwei einander gegenüberliegenden erhaben vorstehenden Seitenwänden 22a, 22b des Kontaktabschnitts 22 tiefer liegend ausgebildet ist. Derart liegen die zwei zweiten Kontakte 41 und 42 an dem zweiten Kontaktabschnitt 22 des zweiten Verbinderbauteils 2 besser vor äußeren Einwirkungen geschützt vor, wenn das zweite Verbinderbauteil 2 von dem ersten Verbinderbauteil 1 getrennt ist. Insbesondere liegen die zweiten Kontakte 41, 42 nicht an einer Stellfläche an, wenn das von dem ersten Verbinderbauteil 1 getrennte zweite Verbinderbauteil 2 mit seiner Unterseite auf der Stellfläche abgelegt wird. So würde in diesem Fall das zweite Verbinderbauteil 2 im Bereich des zweiten Kontaktabschnitts 12 lediglich insbesondere über die Seitenwände 22a, 22b an der Stellfläche aufliegen.

Gleichzeitig bleibt aber die Möglichkeit gewahrt, die zweiten Kontakte 41 und 42 mit den ersten Kontakten 31 und 32 in elektrisch leitenden Kontakt zu bringen, wenn beiden Verbinderbauteile 1, 2 miteinander verbunden werden und die zweite Kontaktfläche 220 einer ebenen Kontaktfläche 120 des ersten Kontaktabschnitts 12 gegenüberliegt. So können die beiden Kontaktflächen 120 und 220 in der Sicherungsposition der ersten und zweiten Verbinderbauteile 1 und 2 aneinander anliegen oder zumindest in einem derart geringen Abstand einander gegenüberliegen, dass die federbelasteten zweiten Kontakte 41, 42 mit den ersten Kontakten 31, 32 an den Kontaktöffnungen 1201, 1202 in Kontakt gebracht sind. Hierfür kann die eine Seitenwand 22b des zweiten Kontaktabschnitts 22 in eine Nut 13 eingeführt werden, die zwischen dem ersten Kontaktabschnitt 12 und dem Eingriffselement 1 an dem Basiskörper 10 ausgeformt ist.

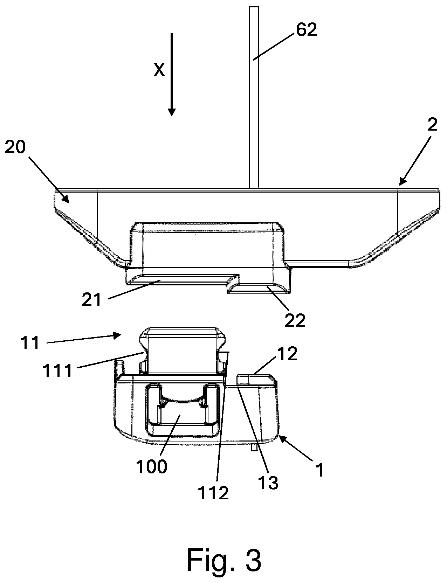

Bei der dargestellten Verbinderbaugruppe weist das erste Verbinderbauteil 1 eine erste Magneteinrichtung M1, zum Beispiel in Form mindestens eines Permanentmagneten auf. Ebenso weist das zweite Verbinderbauteil 2 eine zweite Magneteinrichtung M2, zum Beispiel in Form mindestens eines Permanentmagneten, auf. Die beiden Magneteinrichtungen M1 und M2 wirken einander magnetisch anziehend zusammen, sodass das zweite Verbinderbauteil 2 bei ausreichender Annäherung entlang einer Ansetzrichtung X (vgl. Figur 3) an das erste Verbinderbauteil 1 selbsttätig in die Sicherungsposition überführt wird.

Die erste Magneteinrichtung M1 ist vorliegend in einer Magnetaufnahme 110 an dem Eingriffselement 11 untergebracht. Die Magnetaufnahme 110 ist dabei zu dem zweiten Verbinderbauteil 2 an einer Stirnfläche des Eingriffselement 11 durch eine Verschlussklappe 14 verschlossen. Diese Verschlussklappe 14 ist beispielsweise an der Magnetaufnahme 110 verschweißt oder verklebt oder durch eine Klebemasse, wie z.B. Epoxidharz ausgebildet. Die zweite Magneteinrichtung M2 ist in einer Magnetaufnahme 200 des Verbinderkörpers 20 aufgenommen. Diese Magnetaufnahme 200 ist an der Oberseite des Verbinderkörpers 20 durch eine Verschlussklappe 24 verschlossen. Auch die Verschlussklappe 24 kann hierbei mit der Magnetaufnahme 200 verschweißt oder verklebt sein.

An der Unterseite des Verbinderkörpers 20 ist eine Verbinderaufnahme 21 ausgebildet, in die das Eingriffselement 11 für die Verbindung der ersten und zweiten Verbinderbauteile 1 und 2 hineinragen kann. An einer Seitenwand 21.2 dieser Verbinderaufnahme 21 sind die starren und unbeweglichen Eingriffsvorsprünge 211 und 212 ausgebildet, die in der Sicherungsposition der Verbinderbauteile 1, 2 die Verbinderbauteile 1, 2 formschlüssig miteinander verbinden und sicher aneinanderhalten.

Der die Eingriffsvorsprünge 211 und 212 aufweisenden Wandungen 21.2 der Verbinderaufnahme 21 liegt eine Aussparung 21.2 in Form einer Wandung mit reduzierter Höhe oder einer Öffnung gegenüber. Über diese Aussparung 21.2 der Verbinderaufnahme 21 kann das zweite Verbinderbauteil 2 unter Kippen um eine Kippachse außer Eingriff mit dem Eingriffselement 11 gebracht werden, um die beiden Verbinderbauteile 1 und 2 wieder voneinander zu trennen. Dies wird nachfolgend noch näher erläutert werden.

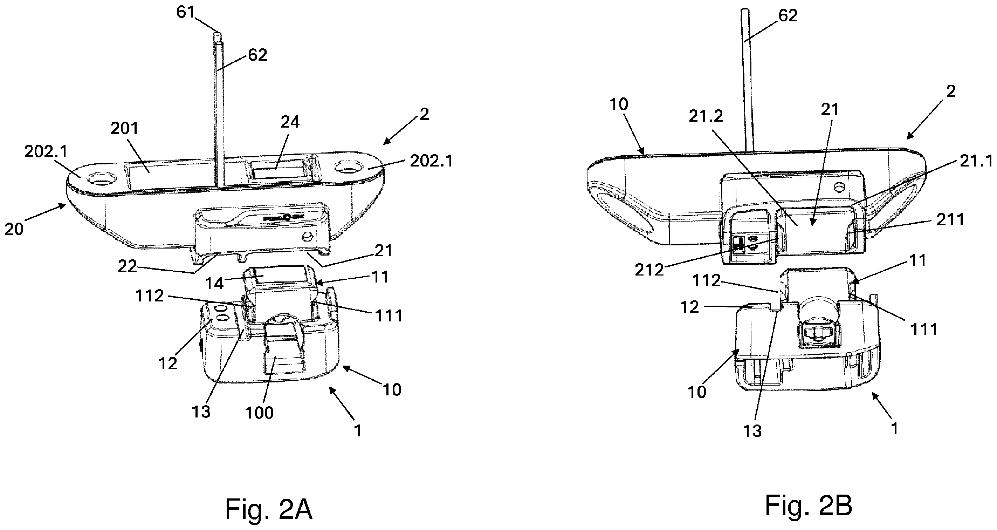

Die Figuren 2A, 2B und 3 zeigen in unterschiedlichen Ansichten die ersten und zweiten Verbinderbauteile 1 und 2 in einem noch unverbundenen Zustand. Hier wird beispielsweise das zweite Verbinderbauteil 2 gerade entlang einer Ansetzrichtung X an das erste Verbinderbauteil 1 angesetzt, das fahrradfest vorgesehen ist. Das zweite Verbinderbauteil 2 wird hierbei mit der Verbinderaufnahme 21 geradlinig auf eine Stirnfläche 11A des Eingriffselements 11 zu an das erste Verbinderbauteil 1 herangeführt.

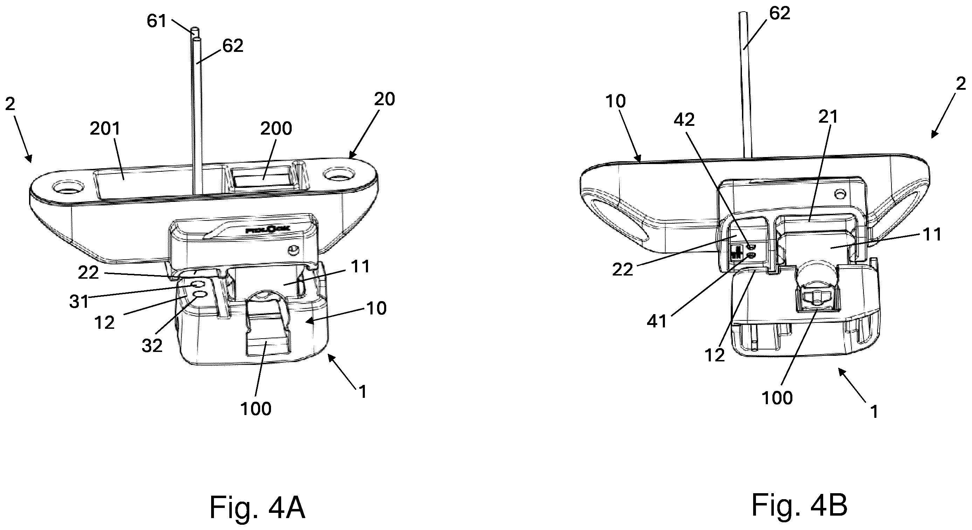

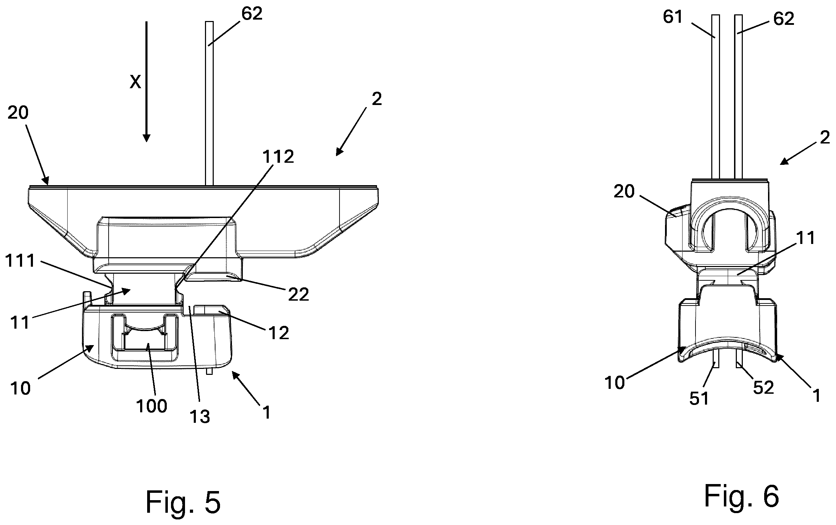

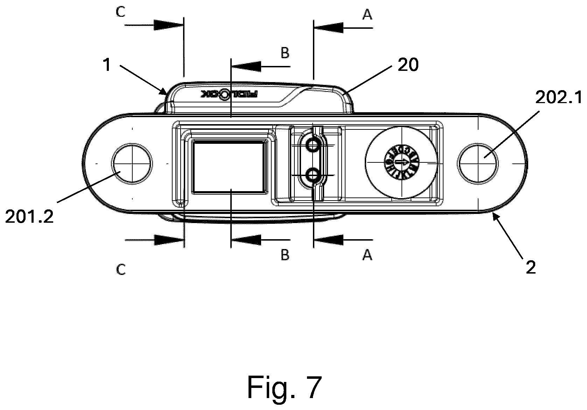

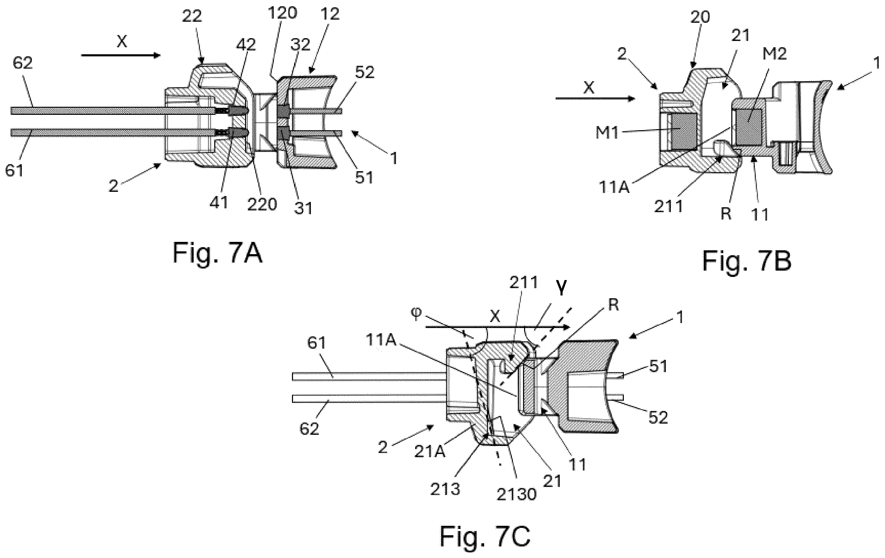

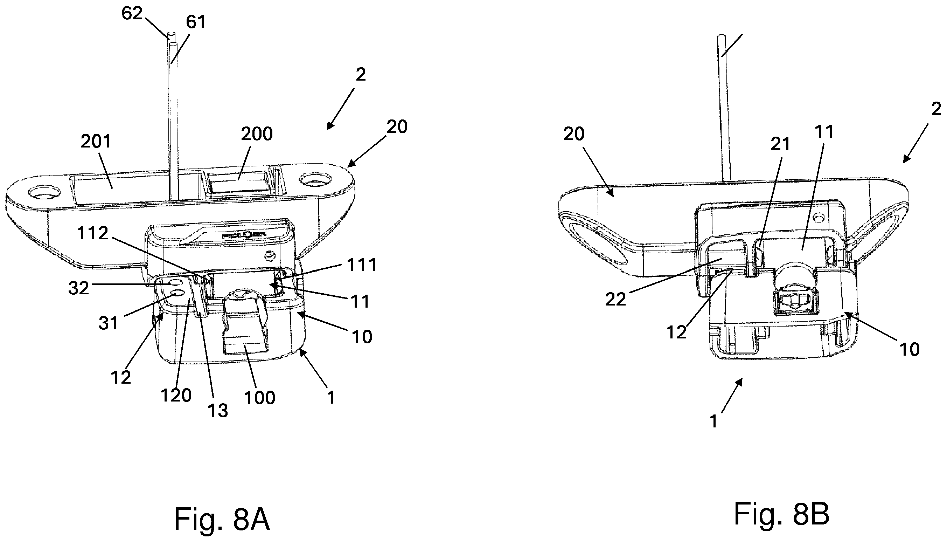

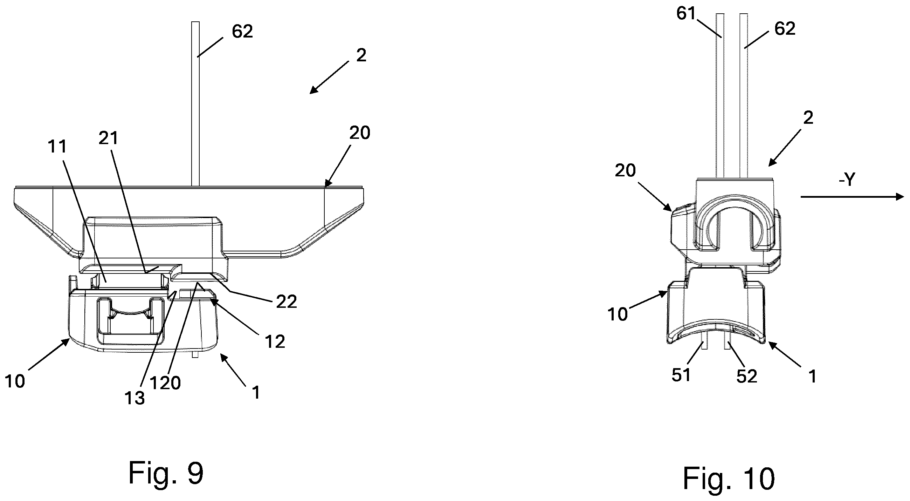

In einer ersten Verbindungsphase, die anhand der Figuren 4A bis 7C illustriert ist, treffen dann die beiden Eingriffsvorsprünge 210 und 211 jeweils mit einer hieran ausgebildeten Rampenfläche in R auf die Stirnfläche 11A des Eingriffselements 11 (vgl. insbesondere die Schnittdarstellungen der Figuren 7B und 7C). Unter der magnetisch anziehenden Wirkung der ersten und zweiten Magneteinrichtungen M1 und M2 entlang der Ansetzrichtung X wird das zweite Verbinderbauteil 2 dem ersten Verbinderbauteil 1 weiter angenähert. Das zweite Verbinderbauteil 2 gleitet jedoch über die Rampenflächen R an der Stirnfläche 11A und gegebenenfalls einem abgeschrägten Rand der Stirnfläche 11A ab, sodass dem zweiten Verbinderbauteil 2 hierüber eine Verlagerungsbewegung quer zu der Ansetzrichtung X, nämlich entlang einer Querrichtung -Y aufgezwungen wird. Diese damit seitliche Verlagerung entlang der Querrichtung -Y in diesem Teil der ersten Verbindungsphase veranschaulichen die Figuren 8A bis 11 C.

Die seitliche Verlagerung bzw. Seitwärtsverlagerung gesteuert über die Rampenflächen R der Eingriffsvorsprünge 211 und 212 erfolgt dabei vorliegend für einen Nutzer der Verbinderbaugruppe vergleichsweise sehr leichtgängig, da die Rampenfläche R der Eingriffsvorsprünge 211 und 212 jeweils unter einem Winkel γ zu der Ansetzrichtung X verlaufen, der im Bereich von 35° bis 60°, bei der dargestellten Ausführungsvariante in einem Bereich von 40° bis 55° liegt.

Insbesondere aus der Schnittdarstellung der Figur 7C ist ferner an einer den Boden der Verbinderaufnahme 21 bildenden Basis 21A der Verbinderaufnahme 21 ein Rampenelement 213 ersichtlich. Dieses eine Rampenelement 213 ist sowohl in Ansetzrichtung X als auch quer hierzu zu den Eingriffsvorsprüngen 211 und 212 versetzt innerhalb der Verbinderaufnahme 21 ausgebildet. Derart trifft das Rampenelement 213 erst in einer zweiten Verbindungsphase auf die Stirnfläche 11A des Eingriffselements 11, nachdem das zweite Verbinderbauteil 2 zuvor über die Rampenflächen R der Eingriffsvorsprünge 211, 212 in Querrichtung -Y verlagert worden ist.

Eine Rampenfläche 2130 des Rampenelements 213 verläuft vorliegend unter einem größeren Winkel φ zu der Ansetzrichtung X als jede der gegenläufig zu der Rampenfläche 2130 orientierten Rampenflächen R der Eingriffsvorsprünge 211, 212, nämlich mit einem Winkel φ im Bereich von 67,5° bis 82,5°, vorliegend mit einem Winkel φ im Bereich von 70° bis 80°.

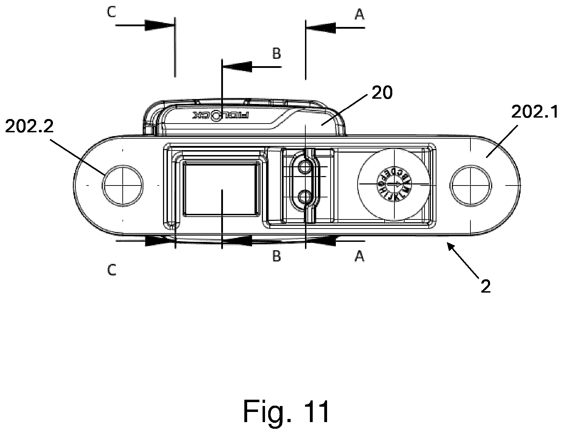

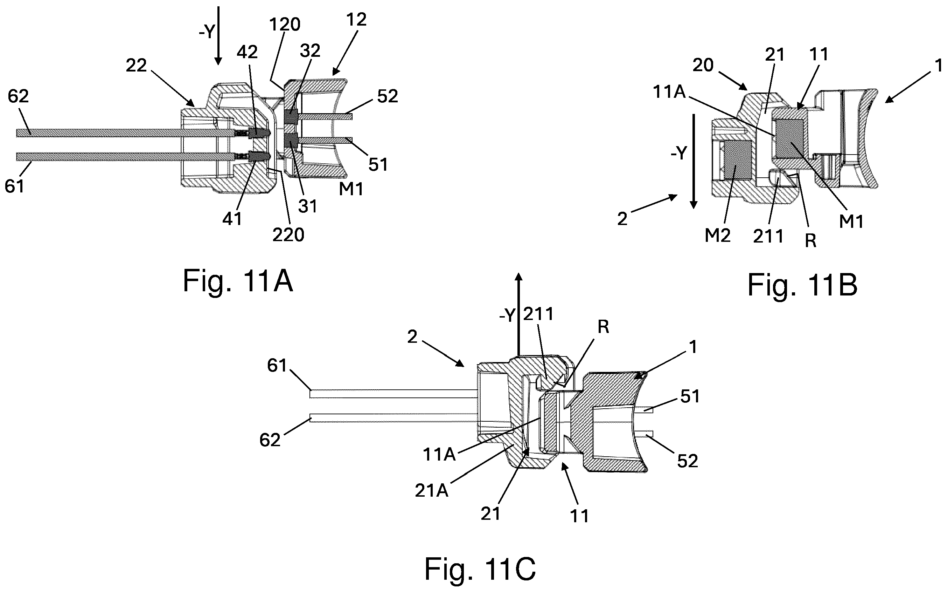

Wie anhand der Schnittdarstellung der Figuren 7A und 11A illustriert ist, wird über die seitliche Verlagerungsbewegung des zweiten Verbinderbauteils 2 relativ zu dem Eingriffselement 11 auch der zweite Kontaktabschnitt 22 bezüglich des ersten Kontaktabschnitts 12 seitwärts verlagert. Derart kommen die ersten und zweiten Kontakte 31, 32 und 41, 42 bei einer Verbindung der ersten und zweiten Verbinderbauteile 1 und 2 nicht unmittelbar entlang der Ansetzrichtung X miteinander in Kontakt, sondern nur über eine Verlagerungsbewegung mit einer Bewegungskomponente quer zu Ansetzrichtung X, wie im Folgenden noch näher erläutert werden wird.

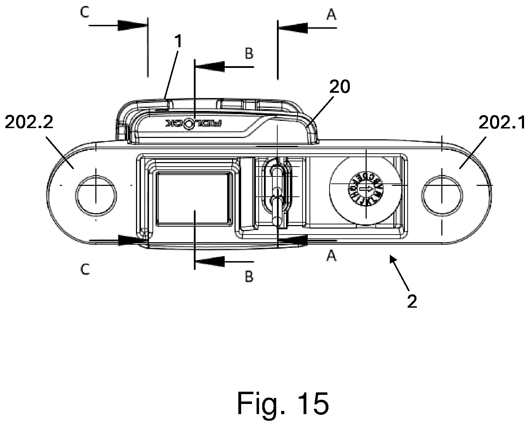

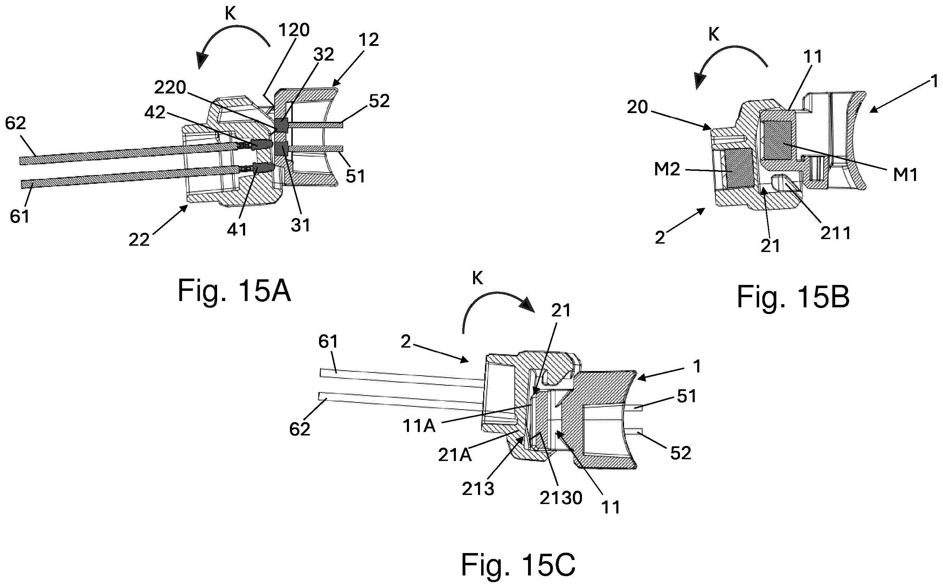

Die beiden Verbinderbauteile 1 und 2 sind während des gesamten Verbindungsprozesses durch die ersten und zweiten Magneteinrichtung M1 und M2 magnetisch in Richtung ihrer Sicherungsposition belastet. Wurde in der ersten Verbindungsphase das zweite Verbinderbauteil 2 so weit in Querrichtung -Y quer zur Ansetzrichtung X seitwärts verlagert, dass die Eingriffsvorsprüngen 211 und 212 seitlich an dem Eingriffselement 11 des ersten Verbinderbauteils 1 vorbeigeführt werden konnten, trifft das zweite Verbinderbauteil 2 mit seiner Basis 21A in einer zweiten Verbindungsphase auf die Stirnfläche 11A des in die Verbinderaufnahme 210 hineinragenden Eingriffselements 11. Indem hierbei entsprechend den Schnittdarstellungen der Figuren 15B und 15C die Basis 21A lediglich an einer Seite, d.h. gegenüberliegend zu der die Eingriffsvorsprüngen 211, 212 tragenden Wandung 21.2, mit dem erhabenen vorstehenden Rampenelement 213 in Ansetzrichtung X auf die Stirnfläche 11A des Eingriffselements 11 trifft, während das Eingriffselement 11 abseits des Rampenelements 213 stärker in die Verbinderaufnahme 21 hineinragen kann, wird dem zweiten Verbinderbauteil 2 bei weiterer Annäherung an das erste Verbinderbauteil 1 eine Bewegungskomponente quer zur Ansetzrichtung X, und entgegengesetzt zu der vorherigen Querrichtung -Y relativ zu dem Eingriffselement 11 aufgezwungen.

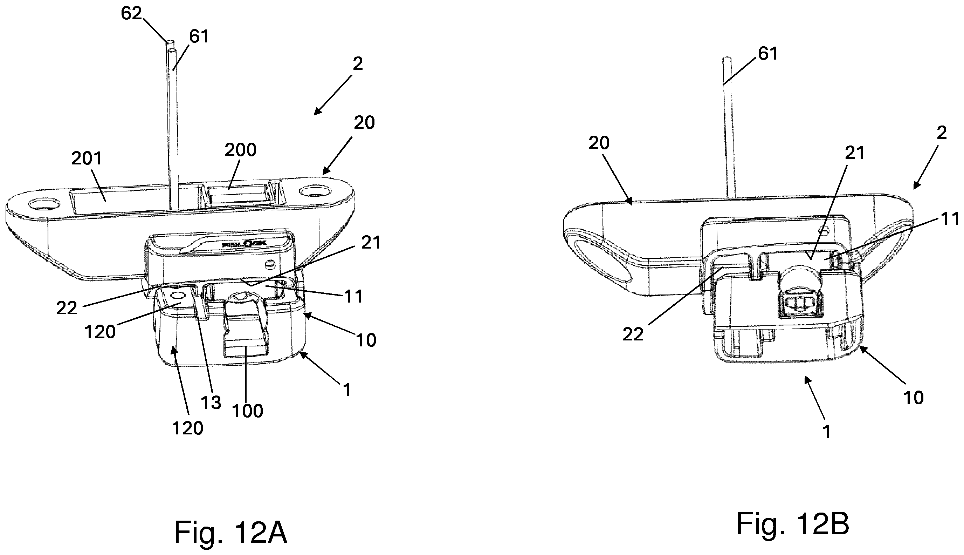

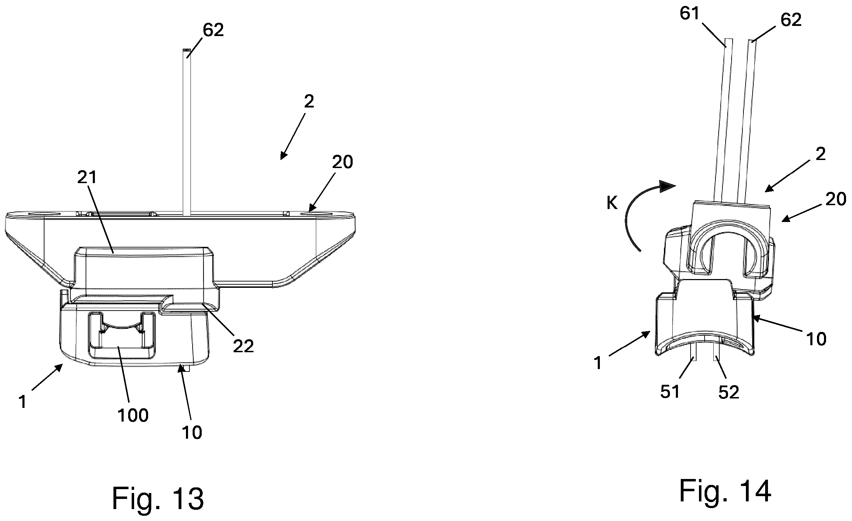

Entsprechend den Darstellungen der Figuren 12A bis 15C wird dem zweiten Verbinderbauteil 2 über das zumindest eine Rampenelement 213 derart eine Verlagerung relativ zu dem Eingriffselement 11 mit einer Bewegungskomponente in eine quer zu der Ansetzrichtung X verlaufende Eingriffsrichtung Y vorgegeben, die zu einer Kippbewegung um eine Kippachse führt. Diese Kippbewegung entlang einer Kipprichtung K (vgl. Figuren 14 und 15A bis 15C) erfolgt um eine Kippachse, die sowohl senkrecht zur Ansetzrichtung X als auch senkrecht zu der Eingriffsrichtung Y orientiert ist.

Über die Kippbewegung werden die Eingriffsvorsprünge 211 und 212 jeweils einem längsseitigen Ende einer zugeordneten Eingriffsaussparung 111 und 112 des Eingriffselement 11 gegenüberliegend angeordnet. Gleitet dann das zweite Verbinderbauteil 2 unter der von den ersten und zweiten Magneteinrichtung M1 und M2 aufgebrachten Magnetkraft mit der Rampenfläche 2130 des Rampenelements 213 an der Stirnfläche 11A des Eingriffselement 11 weiter ab, wird das zweite Verbinderbauteil 2 weiter seitwärts in Eingriffsrichtung Y bezüglich des ersten Verbinderbauteils 1 und insbesondere dessen Eingriffselement 11 verlagert. Hierüber werden die Eingriffsvorsprünge 211, 212 in formschlüssigen Eingriff mit den zugehörigen Eingriffsaussparungen 111, 112 gebracht. Hierüber sind dann die beiden Verbinderbauteile 1 und 2 formschlüssig aneinandergehalten und aneinander gesichert, sodass das zweite Verbinderbauteil 2 nicht mehr entgegengesetzt zu der Ansetzrichtung X von dem ersten Verbinderbauteil 1 getrennt werden kann, ohne zuvor gezielt durch einen Nutzer den Formschluss zu lösen, die über die an dem zapfenförmigen Eingriffselement 11 eingreifenden Eingriffsvorsprünge 211 und 212 bereitgestellt ist.

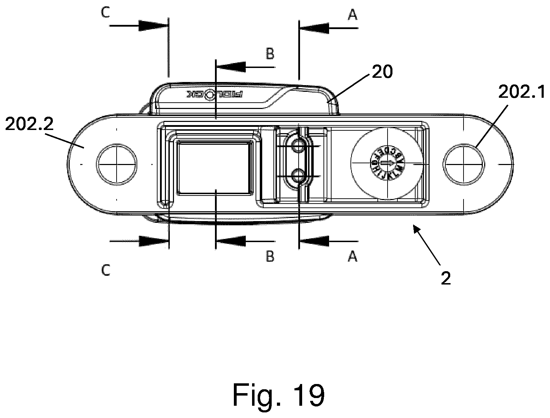

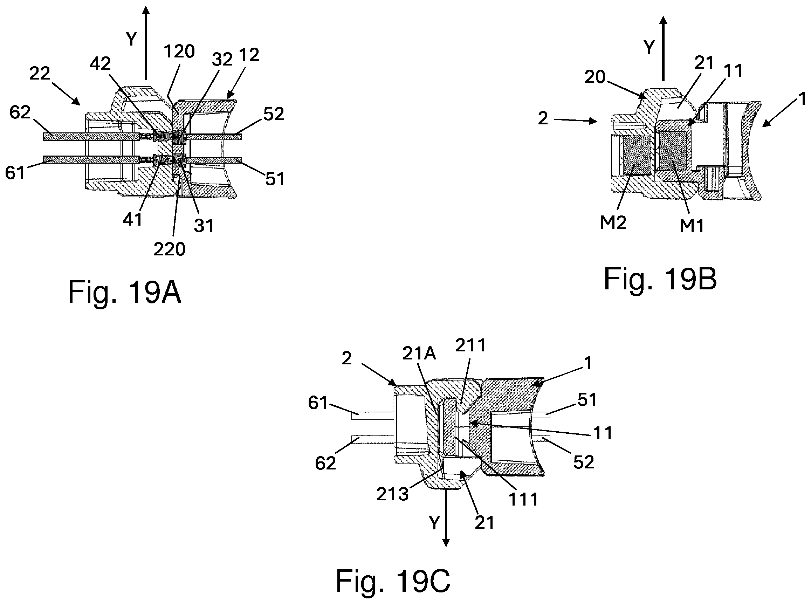

Über das Rampenelement 213 an der Basis 21A der Verbinderaufnahme 21 wird in der zweiten Verbindungsphase der ersten und zweiten Verbinderbauteile 1 und 2 der zweite Kontaktabschnitt 220 mit den angefederten zweiten Kontakten 41, 42 vor dem Erreichen einer in der Figur 19A dargestellten Kontaktierungsposition der ersten und zweiten Kontaktabschnitte 12, 22 auch noch beabstandet zu den ersten Kontakten 31, 32 des ersten Kontaktabschnitts 12 gehalten. Erst mit weiterem Entlanggleiten der Rampenfläche 2130 des Rahmenelements 213 an dem Eingriffselement 11 werden die zweiten Kontakte 41, 42 entlang der Eingriffsrichtung Y seitwärts in Deckung zu den ersten Kontakten 31 und 32 gebracht und hierbei zudem kontinuierlich der ersten Kontaktfläche 120 weitern angenähert. Hierbei wird diese Verlagerung vorliegend auch durch eine seitliche Magnetanziehung der ersten und zweiten Magneteinrichtungen M1, M2 unterstützt. Diese seitliche bzw. seitwärts und mithin quer zur Ansetzrichtung X in Eingriffsrichtung Y gerichtete Magnetanziehung ergibt sich durch den seitlichen Versatz zwischen den ersten und zweiten Magneteinrichtungen M1, M2, der entstanden ist, wenn das zweite Verbinderbauteil 2 an den Rampenflächen R der Eingriffsvorsprünge 211, 212 entlang in Querrichtung -Y bezüglich des Eingriffselements 11 verlagert wurde.

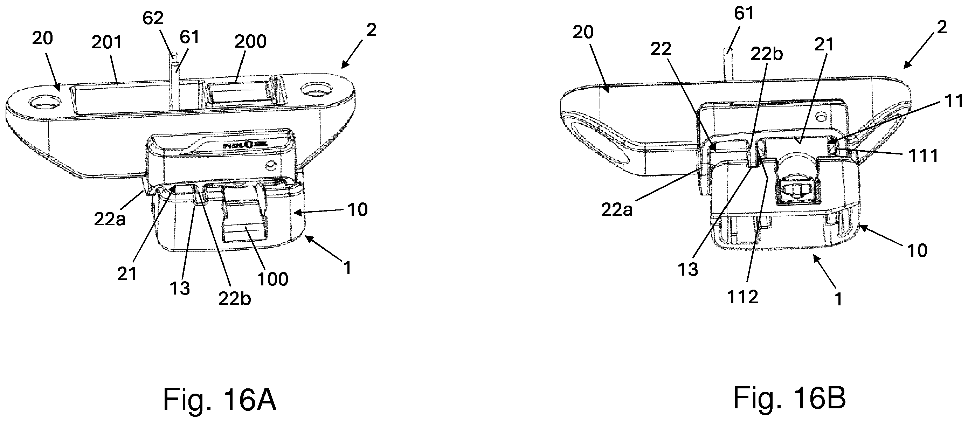

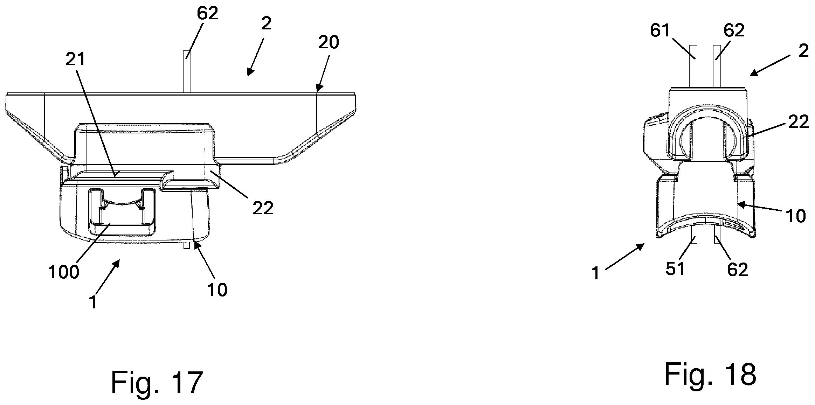

Erst in der anhand der Figuren 16A bis 19C illustrierten Sicherungsposition der ersten und zweiten Verbinderbauteile 1 und 2, in der die beiden Verbinderbauteile 1 und 2 miteinander formschlüssig verbunden sind, sind die Kontakte 31, 32 und 41, 42 paarweise miteinander elektrisch leitend in Kontakt gebracht. Die ersten und zweiten Kontakte 31, 41 und 32, 42 liegen dabei gerade in Ansetzrichtung X aneinander an. Mit der Ausführungsvariante einer vorgeschlagenen Verbinderbaugruppe sind die Kontakte hierbei jedoch paarweise erst über eine Verlagerungsbewegung in Eingriffsrichtung Y und damit quer zu der Ansetzrichtung X der beiden Verbinderbauteile 1 und 2 aneinander in Kontakt gebracht worden.

Um die formschlüssige Sicherung der ersten und zweiten Verbinderbauteile in der Sicherungsposition zu lösen, bestehen bei der dargestellten Ausführungsvariante grundsätzlich zwei Optionen.

Zum einen kann das zweite Verbinderbauteil 2 entgegengesetzt zu der Eingriffsrichtung Y außer Eingriff mit dem Eingriffselement 11 des erstem Verbinderbauteils 1 geschoben werden. Hierbei wird folglich das zweite Verbinderbauteil 2 entlang der Querrichtung -Y relativ zu dem Eingriffselement 11 verschoben. Diese seitliche Verlagerung in Querrichtung -Y bringt die beiden Eingriffsvorsprünge 211 und 212 außer Eingriff mit den zugehörigen Eingriffsaussparungen 111 und 112. Durch die Verschiebung entlang der Querrichtung -Y gleitet auch die Stirnfläche 11 des Eingriffselement 11 auf der Rampenfläche 2130 des Rampenelements 213 auf, sodass mit der Verschiebung eine zunehmende Beabstandung der Kontaktabschnitte 12 und 22 voneinander einhergeht, und zwar bereits bevor der Eingriff der Eingriffsvorsprünge 211, 212 in das Eingriffselement 11 vollständig gelöst und die beiden Verbinderbauteile 1 und 2 voneinander vollständig getrennt werden können (unter Überwindung der durch die ersten und zweiten Magneteinrichtungen M1 und M2 aufgebrachten Magnetkraft, die die ersten und zweite n Verbinderbauteile 1 und 2 weiterhin in die Sicherungsposition belasten). In einer Variante könnten die Verbinderbauteile 1, 2 auch bis zur magnetischen Abstoßung zueinander verschoben werden (sogenannter Kanteneffekt).

Bei dem Verschieben des zweiten Verbinderbauteils 2 entgegengesetzt zu der Eingriffsrichtung Y über das Rampenelement 213 wird das zweiten Verbinderbauteil 2 auch entgegengesetzt zu der Ansetzrichtung X relativ zu dem ersten Verbinderbauteil 1 verlagert. Über das Rampenelement 213 wird somit das zweite Verbinderbauteil 2 bei dem Verschieben angehoben bzw. von dem ersten Verbinderbauteil 1 zumindest geringfügig abgehoben. Hierüber kann eine Entnahme- oder Trennrichtung -X vorgegeben werden, entlang der die ersten und zweiten Verinderbauteile 1, 2 vollständig voneinander trennbar sind. Zudem lässt sich hierüber eine magnetische Anziehungskraft zwischen den ersten und zweiten Magneteinrichtungen M1, M2 bereits etwas abschwächen, die für das vollständige Trennen der ersten und zweiten Verbinderbauteile 1, 2 voneinander anschließend von einem Nutzer überwunden werden muss.

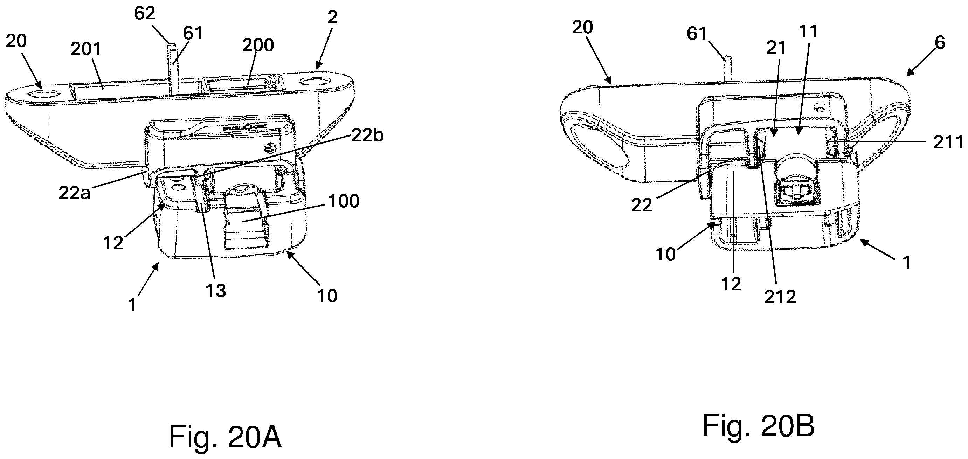

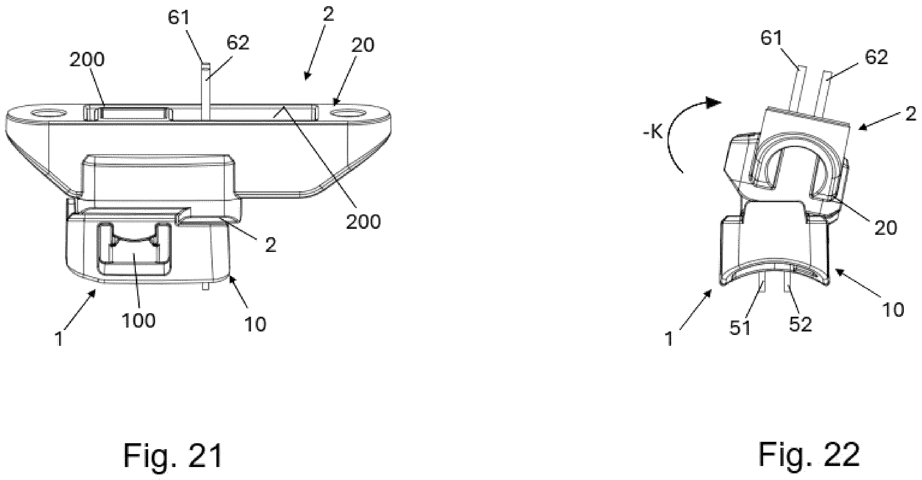

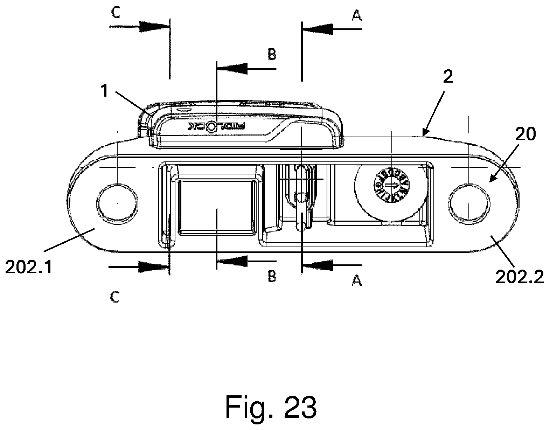

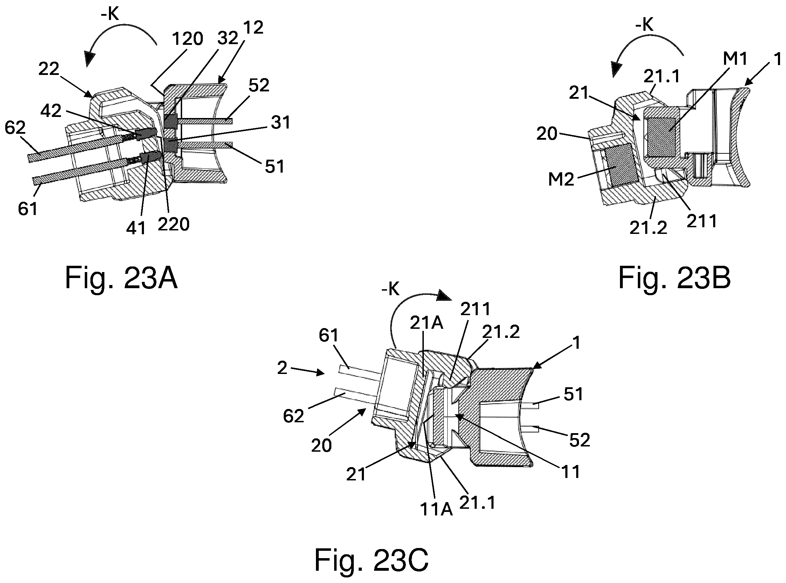

Zum anderen sieht eine weitere Option für das Trennen der beiden Verbinderbauteile 1 und 2 voneinander vor, dass das zweite Verbinderbauteil 2 um eine senkrecht zur Ansetzrichtung X und senkrecht zu der Eingriffsrichtung Y verlaufende Kippachse entlang einer Kipprichtung -K außer Eingriff mit dem ersten Verbinderbauteil 1 gebracht wird. Dies ist anhand der Figuren 20 bis 23C illustriert. Eine Kippachse verläuft hierbei im Bereich der die Eingriffsvorsprünge 211 und 212 tragenden Wandung 21.2, sodass das Eingriffselement 11 an der gegenüberliegenden Seite über die Aussparung 21.1 aus der Verbinderaufnahme 21 heraus geschwenkt werden kann. Hiermit geht dann auch ein Herausschwenken eines von den Eingriffsvorsprüngen 211 und 212 hintergriffenen, die Stirnfläche 11A aufweisenden Kopfes des Eingriffselements 11 aus der Aussparung 21.1 (von der Wandung 21.2 weg) einher. Hierdurch stehen die Eingriffsvorsprünge 211 und 212 nicht mehr mit den Eingriffsaussparungen 111 und 112 formschlüssig in Eingriff und das zweite Verbinderbauteil 2 kann vollständig von dem ersten Verbinderbauteil 1 getrennt werden, wenn das zweite Verbinderbauteil 2 um ein definiertes Maß (d.

h. einen Grenzwert übersteigenden Schwenkwinkel) aus der Sicherungsposition um die Kippachse geschwenkt wurde. Das Herausschwenken um die Kippachse in Kipprichtung -K kann hierbei grundsätzlich dadurch unterstützt sein, dass zwischen den Eingriffsvorsprüngen 211 und 212 ein vorgegebenes Spiel vorhanden ist.

Bei der in den Figuren 1A bis 23C illustrierten Ausführungsvariante einer vorgeschlagenen Verbinderbaugruppe ist somit ein magnetkraftunterstütztes Ansetzen zweier Verbinderbauteile 1, 2 und deren formschlüssige Verbindung miteinander für einen Nutzer schnell und komfortabel möglich. Dabei ist durch die vorgegebenen Verlagerungsbewegungen des zweiten Verbinderbauteils 2 relativ zu dem Eingriffselement 11 des ersten Verbinderbauteils 1 nicht nur die zuverlässige Einnahme der Sicherungsposition gewährleistet. Vielmehr ist hierüber auch eine wiederholte Verbindung und Trennung der Verbinderbauteile 1 und 2 ohne negativen Einfluss auf die elektrischen Kontakte 31, 32 und 41, 42 möglich. Derart kann beispielsweise eine an dem zweiten Verbinderbauteil 2 vorgesehene Leuchte intuitiv und komfortabel mit einem fahrradfesten ersten Verbinderbauteil 1 mechanisch und elektrisch gekoppelt werden.

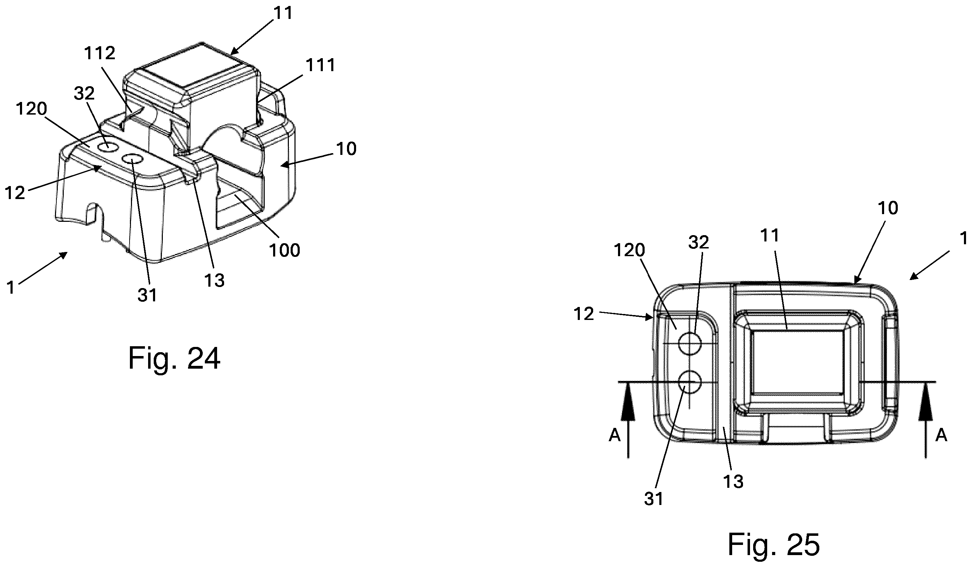

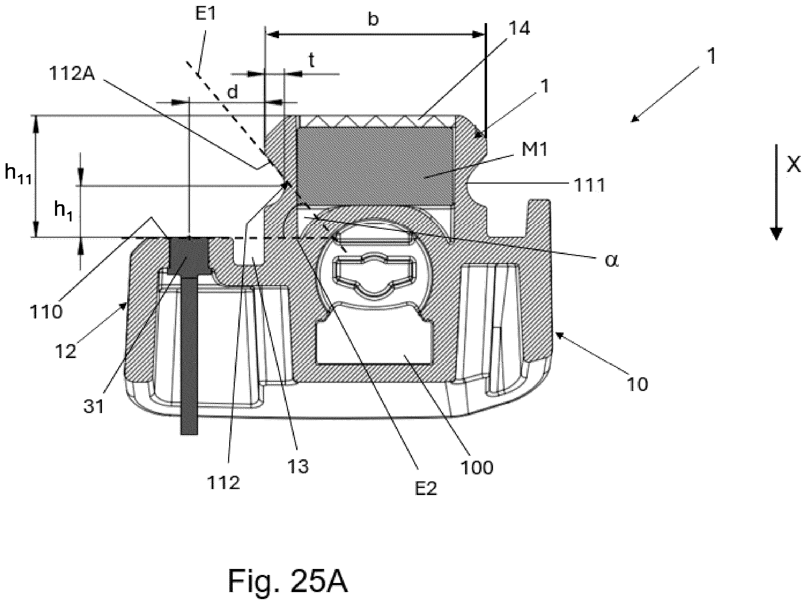

Insbesondere für diesen Verwendungszweck, jedoch auch hiervon unabhängig hat sich eine geometrische Gestaltung des ersten Verbinderbauteils 1 als besonders vorteilhaft erwiesen, die anhand der Figuren 24, 25 und 25A für eine Ausführungsvariante näher veranschaulicht ist. Der Schnittlinie A-A für die Schnittdarstellung der Figur 25A verläuft dabei gemäß der Darstellung der Figur 25 parallel zur Ansetzrichtung X und mit Blick in Richtung entlang einer Erstreckungsrichtung der nutförmigen Eingriffsaussparungen 111 und 112.

Entsprechend der Schnittdarstellung der Figur 25A steht hierbei der Eingriffsabschnitt 11 zapfenförmig von dem Verbinderkörper 11 mit einer Höhe $h_2$ im Bereich von 7-11 mm und einer Breite b im Bereich von 11-16 mm vor. Die an voneinander abgewandten Längsseiten des Eingriffselements 11 vorgesehenen, jeweils nutförmigen Eingriffsaussparungen 111 und 112 weisen jeweils eine Tiefe t im Bereich von 0,7-2 mm auf. In Querrichtung -Y zu dem Eingriffselement 11 beabstandet befindet sich an dem Basiskörper 10 der Kontaktabschnitt 12 mit seiner ebenen Kontaktfläche 120, an der das Paar von Kontakten 31, 32 zugänglich ist.

In Ansetzrichtung X befindet sich die eine Eingriffsaussparung 112 in einer Höhe $h_1$ zu der Kontaktfläche 120 des zweiten Kontaktabschnitts 12. Ein Abstand d, gemessen in der Querrichtung -Y, zwischen einer die Eingriffsaussparung 112 aufweisenden Längsseite des Eingriffselements 11 und einem Kontakt 31 oder 32 ist vorliegend in einem bestimmten Verhältnis zu dieser Höhe $h_1$ gewählt. So gilt bei der dargestellten Ausführungsvariante $0{,}5h_1 \leq d \leq 3h$, und vorliegend gerade $1{,}2h_1 \leq d \leq 1{,}6h_1$. Hierüber befinden sich die Kontakte 31 und 32 in unmittelbarer Nähe zu dem Eingriffselement 11 und derart zu der Eingriffsaussparung 112 positioniert, dass die Kontaktierung der ersten Kontakte 31, 32 durch die zweiten Kontakte 41 und 42 beim Verbinden der ersten und zweiten Verbinderbauteile 1 und 2 zuverlässig möglich ist, ohne einen Formschluss zwischen den beiden Verbinderbauteile 1 und 2 zu beeinträchtigen (insbesondere wenn durch angefederte Kontaktpins für die zweiten Kontakte 41, 41 eine Gegenkraft zur Magnetanziehung aufgebracht wird).

Diese Vorteile werden weiter durch die Ausbildung der Eingriffsaussparung 112 (und der gegenüberliegenden Eingriffsaussparung 111) mit einer Eingriffsschräge 112A unterstützt. Die Eingriffsschräge 112A definiert eine seitliche Wandung der Eingriffsaussparung 112 und verläuft in der Schnittdarstellung der Figur 25A von einem Kopf des Eingriffselements 11 nach innen zu dem tiefsten Punkt der Eingriffsaussparung 112. Hierbei verläuft die Eingriffsschräge 112A geneigt zu der Ansetzrichtung X und ist der benachbarten Kontaktfläche 120 zugewandt. Die Kontaktfläche 120 des ersten Kontaktabschnitts 12 erstreckt sich - entsprechend Darstellung der Figur 25A - entlang einer Kontaktebene E2. Die Eingriffsschräge 112A an der lediglich durch die Nut 13 von dem Kontaktabschnitt 12 getrennten Längsseite des Eingriffselements 11 verläuft wiederum in der Schnittdarstellung der Figur 25A in einer Ebene E1, die unter einem Neigungswinkel $\alpha$ im Bereich von 30° bis 75°, vorliegend im Bereich von 40° bis 60° zu der Kontaktebene E2 verläuft.

Darüber hinaus ist für die Dimensionierung und Geometrie des Basiskörpers 10 mit dem Kontaktabschnitt 12 und dem Eingriffselement 11 vorgesehen, dass der Abstand d maximal dem 6-fachen, insbesondere maximal dem 4-fachen entspricht. Als mögliche zusätzliche Vorgabe kann vorgesehen sein, dass der Abstand d mindestens dem 1,5-fachen der Tiefe t entspricht.

Mit den vorstehend erläuterten geometrischen Abhängigkeiten lässt sich das erste Verbinderbauteil 1 - insbesondere unter Vorgabe der vorstehend im Zusammenhang mit den Figuren 1A bis 23C erläuterten Bewegungsabläufe bei der Verbindung und dem Trennen erster und zweiter Verbinderbauteile 1 und 2 - besonders vorteilhaft mit unterschiedlichen zweiten Verbinderbauteilen kombinieren, die nicht nur mechanisch an dem ersten Verbinderbauteil festzulegen sind, sondern hieran auch eine elektrische Verbindung zu den Kontakten 31, 32 erhalten sollen. Beispielsweise kann hiermit ein Verbinderbauteil 1 entsprechend der Figuren 24, 25 und 25A an einem Fahrrad mit unterschiedlichen Verbinderbauteilen kombinierbar sein oder an verschiedenen Stellen des Fahrrads für die Kombination mit unterschiedlichen Verbinderbauteilen mehrfach vorgesehen sein.

**Bezugszeichenliste**

| | |
|---|---|
| 1 | Erstes Verbinderbauteil |
| 10 | Basiskörper |
| 100 | Verbindungsöffnung |
| 11 | Eingriffselement |
| 11A | Stirnfläche |
| 110 | Magnetaufnahme |
| 111, 112 | Eingriffsaussparung |
| 112A | Eingriffsschräge |
| 12 | Erster Kontaktabschnitt |
| 120 | Erste Kontaktfläche |
| 1201, 1202 | Kontaktöffnung |
| 13 | Nut |
| 14 | Verschlusskappe |
| 2 | Zweites Verbinderbauteil |
| 20 | Verbinderkörper |
| 200 | Magnetaufnahme |
| 201 | Aufnahme |
| 202.1, 202.2 | Verbindungsstelle |
| 21 | Verbinderaufnahme |
| 21.1 | Aussparung |
| 21.2 | Wandung |
| 21A | Basis |
| 211, 212 | Eingriffsvorsprung |
| 213 | Rampenelement |
| 2130 | (Zweite) Rampenfläche |
| 22 | Zweiter Kontaktabschnitt |
| 220 | Zweite Kontaktfläche |
| 22a, 22b | Seitenwand |
| 24 | Verschlusskappe |
| 31, 32 | Erster elektrischer Kontakt |
| 41, 42 | Zweiter elektrischer Kontakt |
| 51, 52 | Anschlussleitung |
| 61, 62 | Anschlussleitung |
| b | Breite |
| d | Abstand |
| E1 | Eingriffsebene (tangential hieran verlaufend) |
| E2 | Kontaktebene |
| $h_1$, $h_{11}$ | Höhe |
| K | Kipprichtung |
| M1 | Erste Magneteinrichtung |
| M2 | Zweite Magneteinrichtung |
| R | (Erste) Rampenfläche |
| t | Tiefe |
| X | Ansetzrichtung |
| Y | Querrichtung / Eingriffsrichtung |
| $\alpha$ | Neigungswinkel |
| $\gamma$, $\varphi$ | Winkel |

**Patentansprüche**

1. Verbinderbaugruppe, mit

- einem ersten Verbinderbauteil (1) mit einem Eingriffselement (11) und einer ersten Magneteinrichtung (M1),
- einem zweiten Verbinderbauteil (2) mit einem Verbinderkörper (20), der zumindest einen starren und an dem Verbinderkörper (20) unbeweglich ausgebildeten Eingriffsvorsprung (210, 211) und eine zweite Magneteinrichtung (M2) aufweist,

wobei die erste Magneteinrichtung (M1) und die zweite Magneteinrichtung (M2) einander magnetisch anziehend zusammenwirken, um die die ersten und zweiten Verbinderbauteile (1, 2) entlang einer Ansetzrichtung (X) einander bis zum Erreichen einer Sicherungsposition aneinander anzunähern, in der die ersten und zweiten Verbinderbauteile (1, 2) miteinander verbunden sind und der zumindest eine Eingriffsvorsprung (210, 211) mit dem Eingriffselement (11) in Eingriff steht, sodass die ersten und zweiten Verbinderbauteile (1, 2) entlang der Ansetzrichtung (X) aneinander gehalten sind,
**dadurch gekennzeichnet, dass**

- das erste Verbinderbauteil (1) einen ersten Kontaktabschnitt (12) mit wenigstens einem ersten elektrischen Kontakt (31, 32) umfasst und das zweite Verbinderbauteil (2) einen zweiten Kontaktabschnitt (22) mit wenigstens einem zweiten elektrischen Kontakt (41, 42) umfasst, wobei die ersten und zweiten Kontaktabschnitte (12, 22) in der Sicherungsposition der ersten und zweiten Verbinderbauteile (1, 2) in einer Kontaktierungsposition vorliegen, in der die ersten und zweiten Kontakte (31, 32; 41, 42) entlang der Ansetzrichtung (X) miteinander in elektrisch leitendem Kontakt stehen, und
- an dem Verbinderkörper (20) zumindest ein Rampenelement (213) vorgesehen ist, über das die ersten und zweiten Kontaktabschnitte (12, 22) zueinander beabstandet gehalten werden, während dem zweiten Verbinderbauteil (2) über das zumindest eine Rampenelement (213) eine Verlagerung relativ zu dem Eingriffselement (11) mit einer Bewegungskomponente in einer quer zu der Ansetzrichtung (X) verlaufenden Eingriffsrichtung (Y) in die Sicherungsposition vorgegeben wird, sodass der zumindest eine Eingriffsvorsprung (210, 211) entlang der Eingriffsrichtung (Y) in Eingriff mit dem Eingriffselement (11) gelangt und die ersten und zweiten Kontaktabschnitte (12, 22) entlang der Eingriffsrichtung (Y) in die Kontaktierungsposition gelangen.

2. Verbinderbaugruppe nach Anspruch 1, **dadurch gekennzeichnet, dass** das Rampenelement (213) in einer Verbinderaufnahme (21) des zweiten Verbinderbauteils (2) vorgesehen ist, in die das Eingriffselement (11) entlang der Ansetzrichtung (X) einführbar ist und/oder das Rampenelement (213) eine geneigt zu der Ansetzrichtung (X) verlaufende Rampenfläche (2130) ausbildet.

3. Verbinderbaugruppe nach Anspruch 1 oder 2, **dadurch gekennzeichnet, dass**

- an dem Verbinderkörper (20) zumindest eine weitere Rampenfläche (R) vorgesehen ist, die geneigt zu der Ansetzrichtung (X) verläuft und über die dem zweiten Verbinderbauteil (2) bei einer Verbindung der ersten und zweiten Verbinderbauteile (1, 2) miteinander in einer ersten Verbindungsphase eine Verlagerung relativ zu dem Eingriffselement (11) entlang einer quer zu der Ansetzrichtung (X) verlaufenden Querrichtung (-Y) vorgegeben wird, die entgegengesetzt zu der Eingriffsrichtung (Y) verläuft, und
- dem zweiten Verbinderbauteil (2) über das Rampenelement (213) in einer der ersten Verbindungsphase folgenden Verbindungsphase die Verlagerung relativ zu dem Eingriffselement (11) mit der Bewegungskomponente entlang der Eingriffsrichtung (Y) in die Sicherungsposition vorgegeben wird.

4. Verbinderbaugruppe nach Anspruch 3, **dadurch gekennzeichnet, dass** die zumindest eine weitere Rampenfläche (R) an dem zumindest einen Eingriffsvorsprung (210, 211) vorgesehen ist und/oder die Verbinderaufnahme (21) eine Basis (21A) umfasst, an der das Rampenelement (213) vorgesehen ist und zu der der zumindest eine Eingriffsvorsprung (210, 211) in Ansetzrichtung (X) beabstandet ist.

5. Verbinderbaugruppe nach Anspruch 3 oder 4, **dadurch gekennzeichnet, dass** der zumindest eine Eingriffsvorsprung (210, 211) in Eingriffsrichtung (Y) zu dem Rampenelement (213) versetzt vorgesehen ist.

6. Verbinderbaugruppe nach einem der vorhergehenden Ansprüche, **dadurch gekennzeichnet, dass**

an dem Verbinderkörper (20) des zweiten Verbinderbauteils (2) zwei starre Eingriffsvorsprünge (210, 211) vorgesehen sind, die jeweils in der Sicherungsposition mit dem Eingriffselement (11) des ersten Verbinderbauteils (1) in Eingriff stehen, und/oder
dem zweiten Verbinderbauteil (2) über das zumindest eine Rampenelement (213) bei der Verbindung mit dem ersten Verbinderbauteil (1) eine Kippbewegung relativ zu dem Eingriffselement (1) um eine Kippachse vorgegeben wird, die sowohl zu der Ansetzrichtung (X) als auch zu der Eingriffsrichtung (Y) senkrecht verläuft, und/oder
in der Sicherungsposition der ersten und zweiten Verbinderbauteile (1, 2) der zumindest eine Eingriffsvorsprung (210, 211) durch Verschieben des zweiten Verbinderbauteils (2) relativ zu dem ersten Verbinderbauteil (1) entgegengesetzt zu der Eingriffsrichtung (Y) außer Eingriff mit dem Eingriffselement (11) bringbar ist.

**7.** Verbinderbaugruppe nach Anspruch 6, **dadurch gekennzeichnet, dass** bei dem Verschieben des zweiten Verbinderbauteils (2) entgegengesetzt zu der Eingriffsrichtung (Y) das zweite Verbinderbauteil (2) über das zumindest eine Rampenelement (213) entgegengesetzt zu der Ansetzrichtung (X) relativ zu dem ersten Verbinderbauteil (1) verlagert wird.

**8.** Verbinderbaugruppe nach einem der vorhergehenden Ansprüche, **dadurch gekennzeichnet, dass** in der Sicherungsposition der ersten und zweiten Verbinderbauteile (1, 2) der zumindest eine Eingriffsvorsprung (210, 211) durch Kippen des zweiten Verbinderbauteils (2) relativ zu dem ersten Verbinderbauteil (1) um eine Kippachse außer Eingriff mit dem Eingriffselement (11) bringbar ist, wobei die Kippachse sowohl zu der Ansetzrichtung (X) als auch zu der Eingriffsrichtung (Y) senkrecht verläuft.

**9.** Verbinderbaugruppe nach Anspruch 2 und nach Anspruch 8, **dadurch gekennzeichnet, dass** für die Kippbarkeit des zweiten Verbinderbauteils (2) relativ zu dem ersten Verbinderbauteil (1) in der Sicherungsposition an der Verbinderaufnahme (21) eine Aussparung (21.1) vorgesehen ist, die einer den zumindest einen Eingriffsvorsprung (210, 211) aufweisenden Wandung (21.2) der Verbinderaufnahme (21) gegenüberliegt und über die ein Ausschwenken des Eingriffselements (11) aus der Verbinderaufnahme (21) gestattet ist.

**10.** Verbinderbaugruppe nach einem der vorhergehenden Ansprüche, **dadurch gekennzeichnet, dass**

- das Eingriffselement (11) an dem Verbinderkörper (10) des ersten Verbinderbauteils (1) längs vorsteht und mit einer Längsseite zu dem ersten Kontaktabschnitt (12) benachbart ist, an der eine Eingriffsaussparung (112) vorgesehen ist, in die in der Sicherungsposition der zumindest eine Eingriffsvorsprung (210, 211) des zweiten Verbinderbauteils (2) eingreift und die mit einer Tiefe t ausgebildet ist, und
- der zumindest eine erste Kontakt (31) des ersten Kontaktabschnitts (12) zu der Längsseite des Eingriffselements (11) um maximal einen Abstand d beabstandet ist, gemessen entlang einer Raumachse, die sowohl zur Ansetzrichtung (X) als auch zur Eingriffsrichtung (Y) senkrecht verläuft,

wobei der Abstand d maximal dem 6-fachen, insbesondere maximal dem 4-fachen..

**11.** Verbinderbaugruppe nach einem der vorhergehenden Ansprüche, **dadurch gekennzeichnet, dass**

- das Eingriffselement (11) an dem Verbinderkörper (10) des ersten Verbinderbauteils (1) parallel zur Ansetzrichtung (X) längs vorsteht und mit einer Längsseite zu dem ersten Kontaktabschnitt (12) benachbart ist, an der eine Eingriffsaussparung (112) vorgesehen ist, in die in der Sicherungsposition der zumindest eine Eingriffsvorsprung (210, 211) des zweiten Verbinderbauteils (2) eingreift,
- der zumindest eine erste Kontakt (31) des ersten Kontaktabschnitts (12) zu der Längsseite des Eingriffselements (11) um maximal einen Abstand d beabstandet ist, gemessen entlang einer Raumachse, die sowohl zur Ansetzrichtung (X) als auch zur Eingriffsrichtung (Y) senkrecht verläuft, und
- der zumindest eine erste Kontakt (31, 32) des ersten Kontaktabschnitts (12) an einer Kontaktfläche (120) des ersten Kontaktabschnitts (12) zugänglich ist und die Eingriffsaussparung (112) an der Längsseite des Eingriffselements (11) in einer Höhe $h_1$, gemessen entlang der Ansetzrichtung (X), zu der Kontaktfläche (120) vorgesehen ist,

wobei der Abstand d mindestens so groß ist wie die Hälfte der Höhe $h_1$ und maximal so groß ist wie das Dreifache der Höhe $h_1$.

**12.** Verbinderbaugruppe nach einem der vorhergehenden Ansprüche, **dadurch gekennzeichnet, dass**

- das Eingriffselement (11) an dem Verbinderkörper (10) des ersten Verbinderbauteils (1) parallel zur Ansetzrichtung (X) längs vorsteht und mit einer Längsseite zu dem ersten Kontaktabschnitt (12) benachbart ist, an der eine Eingriffsaussparung (112) vorgesehen ist, in die in der Sicherungsposition der zumindest eine Eingriffsvorsprung (210, 211) des zweiten Verbinderbauteils (2) eingreift und die mit einer Tiefe t ausgebildet ist, und
- der zumindest eine erste Kontakt (31, 32) des ersten Kontaktabschnitts (12) an einer Kontaktfläche (120) des ersten Kontaktabschnitts (12) zugänglich ist und die Eingriffsaussparung (112) an der Längsseite des Eingriffselements (11) in einer Höhe $h_1$, gemessen entlang der Ansetzrichtung X, zu der Kontaktfläche (120) vorgesehen ist,

wobei gilt:

$$1,5\ t \leq h_1 \leq 3,5\ t.$$

**13.** Verbinderbaugruppe nach einem der vorhergehenden Ansprüche, **dadurch gekennzeichnet, dass**

- der zumindest eine erste Kontakt (31, 32) des ersten Kontaktabschnitts (12) an einer Kontaktfläche (120) des erstem Kontaktabschnitts (12) zugänglich ist und

- das Eingriffselement (11) an dem Verbinderkörper (10) des ersten Verbinderbauteils (1) parallel zur Ansetzrichtung (X) längs vorsteht und mit einer Längsseite zu dem ersten Kontaktabschnitt (12) benachbart ist, an der eine Eingriffsaussparung (112) vorgesehen ist, in die in der Sicherungsposition der zumindest eine Eingriffsvorsprung (210, 211) des zweiten Verbinderbauteils (2) eingreift und die eine der Kontaktfläche (120) zugewandte Eingriffsschräge (112A) umfasst,

wobei die Eingriffsschräge (112A) der Eingriffsaussparung (112) in einer Ebene (E1) liegt, die unter einem Neigungswinkel ($\alpha$) geneigt zu der Kontaktfläche (120) verläuft, insbesondere unter einem Neigungswinkel ($\alpha$) in einem Bereich von 30° bis 75°, insbesondere in einem Bereich von 45° bis 60°.

14. Verbinderbauteil für eine Verbinderbaugruppe, insbesondere für eine Verbinderbaugruppe nach einem der vorhergehenden Ansprüche, mit

- einem Eingriffselement (11), wobei das Verbinderbauteil (1) zum Verbinden mit einem anderen Verbinderbauteil (2) entlang einer Ansetzrichtung (X) vorgesehen ist, das einen starren Eingriffsvorsprung (210, 211) für einen Eingriff an dem Eingriffselement (11) aufweist, und
- einem Kontaktabschnitt (12) mit wenigstens einem ersten elektrischen Kontakt (31, 32), der vorgesehen ist, mit einem zweiten Kontakt (41, 42) des anderen Verbinderbauteils (2) entlang der Ansetzrichtung (X) in elektrisch leitendem Kontakt gebracht zu werden,

**dadurch gekennzeichnet, dass**
das Eingriffselement (11) an dem Verbinderkörper (10) parallel zur Ansetzrichtung (X) längs vorsteht und mit einer Längsseite zu dem Kontaktabschnitt (12) benachbart ist, an der eine Eingriffsaussparung (112) vorgesehen ist, in die der zumindest eine Eingriffsvorsprung (210, 211) des anderen Verbinderbauteils (2) eingreifen kann, wobei

(a)

- der zumindest eine erste Kontakt (31, 32) des Kontaktabschnitts (12) an einer Kontaktfläche (120) des Kontaktabschnitts (12) zugänglich ist und
- die Eingriffsaussparung (112) eine der Kontaktfläche (120) zugewandte Eingriffsfläche (112A) umfasst,

wobei die Eingriffsfläche (112A) der Eingriffsaussparung (112) in einer Ebene (E1) liegt, die unter einem Neigungswinkel ($\alpha$) in einem Bereich von 30° bis 75° geneigt zu der Kontaktfläche (120) verläuft oder parallel zu der Kontaktfläche (120) verläuft,
und/oder
(b)

- der zumindest eine erste Kontakt (31) des Kontaktabschnitts (12) zu der Längsseite des Eingriffselements (11) um maximal einen Abstand d beabstandet ist, gemessen entlang einer Raumachse, die sowohl zu der Ansetzrichtung (X) als auch einer zur Ansetzrichtung (X) quer verlaufenden Querrichtung, entlang der sich die Eingriffsaussparung (112) erstreckt, senkrecht verläuft, und
- der zumindest eine erste Kontakt (31, 32) des ersten Kontaktabschnitts (12) an einer Kontaktfläche (120) des ersten Kontaktabschnitts (12) zugänglich ist und die Eingriffsaussparung (112) an der Längsseite des Eingriffselements (11) in einer Höhe $h_1$, gemessen entlang der Ansetzrichtung (X), zu der Kontaktfläche (120) vorgesehen ist,

wobei der Abstand d mindestens so groß ist wie die Hälfte der Höhe $h_1$ und maximal so groß ist wie das Dreifache der Höhe h1.

15. Fahrrad mit einer Verbinderbaugruppe nach einem der Ansprüche 1 bis 13 und/oder einem Verbinderbauteil nach Anspruch 14.

Fig. 1A

Fig. 1B

EP 4 675 859 A1

Fig. 2A

Fig. 2B

EP 4 675 859 A1

Fig. 3

Fig. 4B

Fig. 4A

Fig. 5

Fig. 6

EP 4 675 859 A1

Fig. 7

Fig. 7A

Fig. 7B

Fig. 7C

Fig. 8B

Fig. 8A

Fig. 10

Fig. 9

202.1

2

20

A

B

C

202.2

Fig. 11

Fig. 11A

Fig. 11B

Fig. 11C

Fig. 12B

Fig. 12A

Fig. 14

Fig. 13

Fig. 15

Fig. 15A

Fig. 15B

Fig. 15C

Fig. 16A

Fig. 16B

EP 4 675 859 A1

Fig. 18

Fig. 17

Fig. 19

Fig. 19B

Fig. 19C

Fig. 19A

Fig. 20B

Fig. 20A

Fig. 22

Fig. 21

Fig. 23

EP 4 675 859 A1

Fig. 23B

Fig. 23C

Fig. 23A

EP 4 675 859 A1

Fig. 24

Fig. 25

Fig. 25A

EP 4 675 859 A1

EUROPÄISCHES PATENTAMT
European Patent Office
Office européen des brevets

## EUROPÄISCHER RECHERCHENBERICHT

Nummer der Anmeldung

EP 25 18 6403

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 102 832 508 A (HIROSE ELECTRIC CO LTD) 19. Dezember 2012 (2012-12-19) | 14 | INV. H01R13/22 |
| Y | * Abbildungen 4-6 * ----- | 1-13,15 | H01R13/627 |
| Y | US 10 903 603 B2 (ROSENBERGER HOCHFREQUENZTECHNIK GMBH & CO KG [DE] ET AL.) 26. Januar 2021 (2021-01-26) * Abbildungen 1-3,6,8 * ----- | 1-13,15 | |
| X | DE 10 2017 212149 A1 (FIDLOCK GMBH [DE]) 17. Januar 2019 (2019-01-17) | 14,15 | |
| Y | * Abbildungen 5A-7D * * Anspruch 8 * ----- | 6,7 | |
| A | US 2016/233611 A1 (SATO SEITARO [JP]) 11. August 2016 (2016-08-11) * das ganze Dokument * ----- | 1-15 | |
| A | WO 2023/099264 A1 (FIDLOCK GMBH [DE]) 8. Juni 2023 (2023-06-08) * das ganze Dokument * ----- | 1-15 | |
| | | | RECHERCHIERTE SACHGEBIETE (IPC) |
| A | WO 2023/285284 A1 (ZAHNRADFABRIK FRIEDRICHSHAFEN [DE]) 19. Januar 2023 (2023-01-19) * Abbildungen 1,2 * ----- | 15 | H01R A44B F16B A45C B62J |

Der vorliegende Recherchenbericht wurde für alle Patentansprüche erstellt

| Recherchenort | Abschlußdatum der Recherche | Prüfer |
|---|---|---|
| Den Haag | 17. November 2025 | Bidet, Sébastien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 18 6403

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2025

| Im Recherchenbericht angeführtes Patentdokument | Datum der Veröffentlichung | Mitglied(er) der Patentfamilie | Datum der Veröffentlichung |
|---|---|---|---|
| CN 102832508 A | 19-12-2012 | CN 102832508 A | 19-12-2012 |
| | | JP 5312528 B2 | 09-10-2013 |
| | | JP 2013004244 A | 07-01-2013 |
| | | TW 201320501 A | 16-05-2013 |
| US 10903603 B2 | 26-01-2021 | CN 109314343 A | 05-02-2019 |
| | | DE 102016006775 A1 | 07-12-2017 |
| | | EP 3427347 A1 | 16-01-2019 |
| | | KR 20190011728 A | 07-02-2019 |
| | | TW 201813213 A | 01-04-2018 |
| | | US 2020161805 A1 | 21-05-2020 |
| | | WO 2017207082 A1 | 07-12-2017 |
| DE 102017212149 A1 | 17-01-2019 | CN 110892591 A | 17-03-2020 |
| | | DE 102017212149 A1 | 17-01-2019 |
| | | EP 3652811 A1 | 20-05-2020 |
| | | EP 3780288 A1 | 17-02-2021 |
| | | ES 2896310 T3 | 24-02-2022 |
| | | US 2020235520 A1 | 23-07-2020 |
| | | WO 2019011819 A1 | 17-01-2019 |
| US 2016233611 A1 | 11-08-2016 | CN 105870696 A | 17-08-2016 |
| | | JP 6254542 B2 | 27-12-2017 |
| | | JP 2016149212 A | 18-08-2016 |
| | | US 2016233611 A1 | 11-08-2016 |
| WO 2023099264 A1 | 08-06-2023 | CN 118302080 A | 05-07-2024 |
| | | DE 102021213556 B3 | 16-02-2023 |
| | | EP 4440363 A1 | 09-10-2024 |
| | | US 2024415240 A1 | 19-12-2024 |
| | | WO 2023099264 A1 | 08-06-2023 |
| WO 2023285284 A1 | 19-01-2023 | CN 117581428 A | 20-02-2024 |
| | | DE 102022206956 A1 | 19-01-2023 |
| | | DE 202022103815 U1 | 01-08-2022 |
| | | EP 4371192 A1 | 22-05-2024 |
| | | US 2024336326 A1 | 10-10-2024 |
| | | WO 2023285284 A1 | 19-01-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020157289 A1